# EUROPEAN PATENT APPLICATION

(11) **EP 4 380 298 A1**
(43) Date of publication of application: **05.06.2024**
(21) Application number: 22851977.3
(22) Date of filing: 26.07.2022
(51) Int. Cl.: H04W 76/27, H04W 12/10

(54) **MESSAGE TRANSMISSION METHOD AND COMMUNICATION APPARATUS**

(30) Priority: 06.08.2021 CN 202110901463
(71) Applicant: Huawei Technologies Co., Ltd., Shenzhen, Guangdong 518129 (CN)
(72) Inventor: XIANG, Hongyu, Shenzhen, Guangdong 518129 (CN); CHEN, Lei, Shenzhen, Guangdong 518129 (CN); XU, Bin, Shenzhen, Guangdong 518129 (CN); LI, Bingzhao, Shenzhen, Guangdong 518129 (CN)
(74) Representative: Gill Jennings & Every LLP
(86) International application number: PCT/CN2022/107998
(87) International publication number: WO 2023/011263

(57) **Abstract**

This application provides a message transmission method and a communication apparatus. The message transmission method includes: A first network device receives a first message from a terminal device, where the first message includes a resume cause value and an integrity check code, the integrity check code is generated based on the resume cause value, the terminal device is in an inactive state, and the resume cause value is a resume cause indicated by a higher layer or a radio resource control RRC layer. The first network device sends a second message to a second network device, where the second message includes the resume cause value and the integrity check code, and the second network device is a network device that stores a context of the terminal device. Through implementation of this application, transmission security of the resume cause value can be improved.

## Description

This application claims priority to Chinese Patent Application No. 202110901463.5, filed with the China National Intellectual Property Administration on August 6, 2021 and entitled "MESSAGE TRANSMISSION METHOD AND COMMUNICATION APPARATUS", which is incorporated herein by reference in its entirety.

### TECHNICAL FIELD

The present invention relates to the field of communication technologies, and in particular, to a message transmission method and a communication apparatus.

### BACKGROUND

In wireless communication, communication security is a very important factor, and relates to security assurance of user data. A pseudo base station attack is a common means to threaten wireless security. A pseudo base station is an unauthorized base station, and usually includes a simple wireless device and dedicated open-source software. The pseudo base station may intercept communication content between a base station and a terminal device, to monitor and tamper with privacy data of a user. For example, when the terminal device is in an inactive state, and requests to resume a previously suspended radio resource control (Radio Resource Control, RRC) connection or perform radio notification area (Radio Notification Area, RNA) update, the UE sends an RRCResumeRequest message to a current serving base station. A resume cause resumeCause value in the RRCResumeRequest message indicates a resume cause. When a man-in-the-middle attack occurs, the resumeCause value in the RRCResumeRequest message sent by the terminal device may be tampered with, causing the current serving base station to reject access of the terminal device.

### SUMMARY

Embodiments of this application provide a message transmission method and a communication apparatus, to perform integrity protection on a resume cause value, so that tampering with the resume cause value is avoided, and transmission security of the resume cause value is improved.

According to a first aspect, an embodiment of this application provides a message transmission method. The method may be performed by a first network device, or may be performed by a component (for example, a processor, a chip, or a chip system) of the first network device. The first network device may be a current serving base station of a terminal device, and the message transmission method may include: The first network device receives a first message from the terminal device, where the first message includes a resume cause value and an integrity check code, the integrity check code is generated based on the resume cause value, the terminal device is in an inactive state, and the resume cause value is a resume cause indicated by a higher layer or a radio resource control RRC layer. It may be understood that that the integrity check code is generated based on the resume cause value may be understood as that integrity protection is performed on the resume cause value, in other words, inputs for generating the integrity check code includes the resume cause value. For example, the first message may be an RRCResumeRequest message.

The first network device sends a second message to a second network device in response to the first message, where the second message includes the resume cause value and the integrity check code, and the second network device is a network device that stores a context of the terminal device. For example, the second network device is a network device connected to the terminal device before the terminal device is switched to the inactive state.

Through implementation of the method described in the first aspect, the integrity check code is generated based on the resume cause value, in other words, the integrity protection is performed on the resume cause value. Therefore, the resume cause value can be prevented from being tampered with in a transmission process, and transmission security of the resume cause value can be improved.

In a possible implementation of the first aspect, the second message is used to request to obtain the context of the terminal device. For example, the second message is a retrieve UE context request message. The method further includes:
When the first network device receives the context of the terminal device from the second network device, it indicates that a check on the integrity check code generated based on the resume cause value succeeds. The first network device sends a third message to the terminal device based on the resume cause value, where the third message is a response message of the first message.

In a possible implementation of the first aspect, the first message further includes first indication information, and the first indication information indicates that the integrity check code is generated based on the resume cause value.

Based on the first indication information, the first network device may determine that the received resume cause value needs to be forwarded to the second network device, so that the second network device checks the integrity check code by using the resume cause value, in other words, the second network device uses the resume cause value as one of inputs when checking the integrity check code.

In a possible implementation of the first aspect, the second message further includes second indication information, and the second indication information indicates that the integrity check code is generated based on the resume cause value.

Based on the second indication information, the second network device uses the resume cause value as one of the inputs when checking the integrity check code.

In a possible implementation of the first aspect, the first network device sends a broadcast message before receiving the first message, where the broadcast message includes third indication information, and the third indication information indicates that the first network device supports a capability of performing integrity protection based on the resume cause value.

The terminal device may determine, based on the third indication information, whether to use the resume cause value as one of the inputs when generating the integrity check code. The first network device supports performing integrity protection based on the resume cause value, so that the terminal device uses the resume cause value as an input to generate the integrity check code.

In a possible implementation of the first aspect, the second message sent by the first network device to the second network device further includes fourth indication information, and the fourth indication information indicates that the first network device supports the capability of performing integrity protection based on the resume cause value.

According to a second aspect, an embodiment of this application provides a message transmission method. The method may be performed by a second network device, or may be performed by a component (for example, a processor, a chip, or a chip system) of the second network device. The second network device may be a last serving base station of a terminal device, and the second network device stores a context of the terminal device. The message transmission method may include: The second network device receives a second message from a first network device, where the second message is triggered when the first network device receives a resume cause value and an integrity check code that are sent by the terminal device, the second message includes the resume cause value and the integrity check code, the terminal device is in an inactive state, and the resume cause value is a resume cause indicated by a higher layer or a radio resource control RRC layer.

The second network device checks the integrity check code by using the resume cause value.

Through implementation of the method described in the second aspect, the second network device checks the integrity check code by using the resume cause value, to determine whether the resume cause value is tampered with in a transmission process, and improve transmission security of the resume cause value.

In a possible implementation of the second aspect, the second message is used to request to obtain the context of the terminal device, and the method may further include:

The second network device sends the context of the terminal device to the first network device when the check succeeds.

In a possible implementation of the second aspect, the second message further includes second indication information, and the second indication information indicates that the integrity check code is generated based on the resume cause value.

That the second network device checks the integrity check code by using the resume cause value includes:
The second network device checks the integrity check code based on the second indication information by using the resume cause value.

In a possible implementation of the second aspect, the method further includes:
The second network device sends a broadcast message, where the broadcast message includes fifth indication information, and the fifth indication information indicates that the second network device supports a capability of checking the integrity check code by using the resume cause value, or indicates the terminal device to generate the integrity check code based on the resume cause value.

In a possible implementation of the second aspect, the method further includes:
The second network device receives capability information from the terminal device, where the capability information indicates that the terminal device supports a capability of generating the integrity check code based on the resume cause value.

The second network device sends sixth indication information to the terminal device in response to the capability information, where the sixth indication information indicates the terminal device to generate the integrity check code based on the resume cause value.

According to a third aspect, an embodiment of this application provides a message transmission method. The method may be performed by a terminal device, or may be performed by a component (for example, a processor, a chip, or a chip system) of the terminal device. The message transmission method may include: The terminal device generates an integrity check code based on a resume cause value, where the terminal device is in an inactive state, and the resume cause value is a resume cause indicated by a higher layer or a radio resource control RRC layer.

The terminal device sends a first message to a first network device, where the first message includes the resume cause value and the integrity check code.

Through implementation of the method described in the third aspect, the integrity check code is generated based on the resume cause value, in other words, integrity protection is performed on the resume cause value. Therefore, the resume cause value can be prevented from being tampered with in a transmission process, and transmission security of the resume cause value can be improved.

In a possible implementation of the third aspect, the first message further includes first indication information, and the first indication information indicates that the integrity check code is generated based on the resume cause value.

In a possible implementation of the third aspect, the method further includes:
The terminal device receives third indication information from the first network device, where the third indication information indicates that the first network device supports a capability of performing integrity protection based on the resume cause value.

That the terminal device generates an integrity check code based on a resume cause value includes:
The terminal device generates the integrity check code based on the resume cause value in response to the third indication information.
In a possible implementation of the third aspect, before the terminal device receives the third indication information from the first network device, the method further includes:
The terminal device receives fifth indication information from a second network device, where the fifth indication information indicates that the second network device supports a capability of checking the integrity check code by using the resume cause value, or indicates the terminal device to generate the integrity check code based on the resume cause value, and the second network device is a network device that stores a context of the terminal device.
That the terminal device generates the integrity check code based on the resume cause value in response to the third indication information includes:

The terminal device generates the integrity check code based on the resume cause value in response to the third indication information and the fifth indication information.

In a possible implementation of the third aspect, before the terminal device receives the third indication information from the first network device, the method further includes:
The terminal device sends capability information to a second network device, where the capability information indicates that the terminal device supports a capability of generating the integrity check code based on the resume cause value, and the second network device is a network device that stores a context of the terminal device.

The terminal device receives sixth indication information from the second network device, where the sixth indication information indicates the terminal device to generate the integrity check code based on the resume cause value.

That the terminal device generates the integrity check code based on the resume cause value in response to the third indication information includes:
The terminal device generates the integrity check code based on the resume cause value in response to the third indication information and the sixth indication information.

According to a fourth aspect, an embodiment of this application provides a message transmission method. The method may be performed by a terminal device, or may be performed by a component (for example, a processor, a chip, or a chip system) of the terminal device. The message transmission method may include: The terminal device sends a first message to a first network device, where the first message includes a first resume cause value, the terminal device is in an inactive state, and the first resume cause value is a resume cause indicated by a higher layer or a radio resource control RRC layer.

The terminal device receives a second message from the first network device, where the second message includes a second resume cause value.

The terminal device compares the first resume cause value and the second resume cause value, and determines, based on a comparison result, whether the first resume cause value is tampered with.

Through implementation of the method described in the fourth aspect, the terminal device receives the resume cause value sent by the first network device, and compares the resume cause value with the resume cause value sent by the terminal device to the first network device, to determine whether the resume cause value is tampered with.

In a possible implementation of the fourth aspect, the first message is an RRC connection resume request message, and the second message is an RRC connection resume message or an RRC connection release message.

According to a fifth aspect, an embodiment of this application provides a message transmission method. The method may be performed by a first network device, or may be performed by a component (for example, a processor, a chip, or a chip system) of the first network device. The message transmission method may include: The first network device receives a first message from a terminal device, where the first message includes a first resume cause value and an integrity check code, and the terminal device is in an inactive state.

The first network device sends a second message to a second network device in response to the first message, where the second message includes the integrity check code, and the second network device is a network device that stores a context of the terminal device.

The first network device sends a third message to the terminal device when a check of the second network device on the integrity check code succeeds, where the third message includes the first resume cause value.

In a possible implementation of the fifth aspect, the second message is used to request to obtain the context of the terminal device.

That the first network device sends a third message to the terminal device when a check of the second network device on the integrity check code succeeds includes:
The first network device sends the third message to the terminal device when receiving the context of the terminal device from the second network device.

In a possible implementation of the fifth aspect, the method further includes:
The first network device receives first indication information from the second network device, where the first indication information indicates the first network device to send the third message including the first resume cause value to the terminal device.

That the first network device sends a third message to the terminal device includes:
The first network device sends the third message to the terminal device based on the first indication information.

According to a sixth aspect, an embodiment of this application provides a message transmission method. The method may be performed by a second network device, or may be performed by a component (for example, a processor, a chip, or a chip system) of the second network device. The message transmission method may include: The second network device receives a first message from a first network device, where the first message is triggered when the second network device receives a first resume cause value and an integrity check code that are sent by a terminal device, the first message includes the integrity check code, and the terminal device is in an inactive state.

The second network device sends first indication information to the first network device when a check of the second network device on the integrity check code succeeds, where the first indication information indicates the first network device to send a message including the first resume cause value to the terminal device.

In a possible implementation of the sixth aspect, the method further includes:
The second network device receives second indication information from the terminal device, where the second indication information indicates the terminal device to verify whether a resume cause value is tampered with.

That the second network device sends first indication information to the first network device includes:
The second network device sends the first indication information to the first network device based on the second indication information.

In a possible implementation of the sixth aspect, the first message is used to request to obtain a context of the terminal device.

That the second network device sends first indication information to the first network device when a check of the second network device on the integrity check code succeeds includes:
The second network device sends the first indication information and the context of the terminal device to the first network device when the check of the second network device on the integrity check code succeeds.

According to a seventh aspect, an embodiment of this application provides a communication apparatus. The apparatus includes modules or units configured to perform the method according to any one of the first aspect to the sixth aspect.

According to an eighth aspect, an embodiment of this application provides a communication apparatus. The apparatus includes a processor. The processor is coupled to a memory, and may be configured to execute instructions in the memory, to implement the method according to any one of the first aspect to the sixth aspect. Optionally, the communication apparatus further includes the memory. Optionally, the communication apparatus further includes a communication interface, and the processor is coupled to the communication interface.

According to a ninth aspect, an embodiment of this application provides a processor. The processor includes an input circuit, an output circuit, and a processing circuit. The processing circuit is configured to: receive a signal through the input circuit, and transmit a signal through the output circuit, to enable the processor to perform the method according to any one of the first aspect to the sixth aspect.

In a specific implementation process, the processor may be one or more chips, the input circuit may be an input pin, the output circuit may be an output pin, and the processing circuit may be a transistor, a gate circuit, a trigger, any logic circuit, or the like. The input signal received through the input circuit may be received and input through, for example, but not limited to, a receiver, and the signal output through the output circuit may be output to, for example, but not limited to, a transmitter and transmitted through the transmitter. The input circuit and the output circuit may be a same circuit, and the circuit is used as the input circuit and the output circuit at different moments. Specific implementations of the processor and the various circuits are not limited in this embodiment of this application.

According to a tenth aspect, an embodiment of this application provides a processing apparatus. The apparatus includes a processor and a memory. The processor is configured to: read instructions stored in the memory, receive a signal through a receiver, and transmit a signal through a transmitter, to perform the method according to any one of the first aspect to the sixth aspect.

Optionally, there are one or more processors, and there are one or more memories.

Optionally, the memory may be integrated with the processor, or the memory and the processor are separately disposed.

In a specific implementation process, the memory may be a non-transitory (non-transitory) memory, for example, a read-only memory (read-only memory, ROM). The memory and the processor may be integrated on a same chip, or may be disposed on different chips. A type of the memory and a manner of disposing the memory and the processor are not limited in this embodiment of this application.

It should be understood that for related data exchange processes, for example, sending a CN PDB may be a process of outputting the CN PDB from the processor, and receiving a CN PDB may be a process of receiving the CN PDB by the processor. Specifically, data output by the processor may be output to the transmitter, and input data received by the processor may be from the receiver. The transmitter and the receiver may be collectively referred to as a transceiver.

The processing apparatus in the tenth aspect may be one or more chips. The processor in the processing apparatus may be implemented by using hardware, or may be implemented by using software. When the processor is implemented by using hardware, the processor may be a logic circuit, an integrated circuit, or the like. When the processor is implemented by using software, the processor may be a general-purpose processor, and is implemented by reading software code stored in the memory. The memory may be integrated into the processor, or may be located outside the processor and exist independently.

According to an eleventh aspect, an embodiment of this application provides a computer program product. The computer program product includes a computer program (which may also be referred to as code or instructions). When the computer program is run, a computer is enabled to perform the method according to any one of the first aspect to the sixth aspect.

According to a twelfth aspect, an embodiment of this application provides a readable storage medium. The readable storage medium stores a computer program (which may also be referred to as code or instructions). When the computer program is run on a computer, the method according to any one of the first aspect to the sixth aspect is implemented.

According to a thirteenth aspect, an embodiment of this application provides a communication system. The system includes a terminal device, a first network device, and a second network device.

According to a fourteenth aspect, a chip system is provided. The chip system includes a processor and an interface circuit. The processor is configured to invoke, from a memory, a computer program (which may also be referred to as code or instructions) stored in the memory and run the computer program, to implement functions in any one of the first aspect to the sixth aspect. In a possible design, the chip system further includes the memory, and the memory is configured to store necessary program instructions and data. The chip system may include a chip, or may include a chip and another discrete component.

### BRIEF DESCRIPTION OF DRAWINGS

FIG. 1 is a diagram of a 5G system architecture according to this application;
FIG. 2 is a schematic diagram of an air interface integrity protection algorithm according to this application;
FIG. 3 is a schematic diagram of state switching of a terminal device according to this application;
FIG. 4 is a schematic diagram of an RRC connection resume procedure of a terminal device according to this application;
FIG. 5 is a schematic diagram of a K_{gNB} generation procedure according to this application;
FIG. 6 is a schematic flowchart of a message transmission method according to this application;
FIG. 7 is a schematic flowchart of a specific example of a message transmission method according to this application;
FIG. 8 is a schematic flowchart of another specific example of a message transmission method according to this application;
FIG. 9 is a schematic flowchart of another message transmission method according to this application;
FIG. 10 is a schematic flowchart of a specific example of a message transmission method according to this application;
FIG. 11 is a schematic block diagram of a communication apparatus according to an embodiment of this application;
FIG. 12 is a schematic block diagram of another communication apparatus according to an embodiment of this application; and
FIG. 13 is a schematic diagram of a structure of a chip according to an embodiment of this application.

### DESCRIPTION OF EMBODIMENTS

Technical solutions in embodiments of this application may be applied to various communication systems, for example, a long term evolution (long term evolution, LTE) system, a universal mobile telecommunication system (universal mobile telecommunication system, UMTS), a 5th generation (5th generation, 5G) system, a new radio (new radio, NR) system, and another new system emerging with development of technologies.

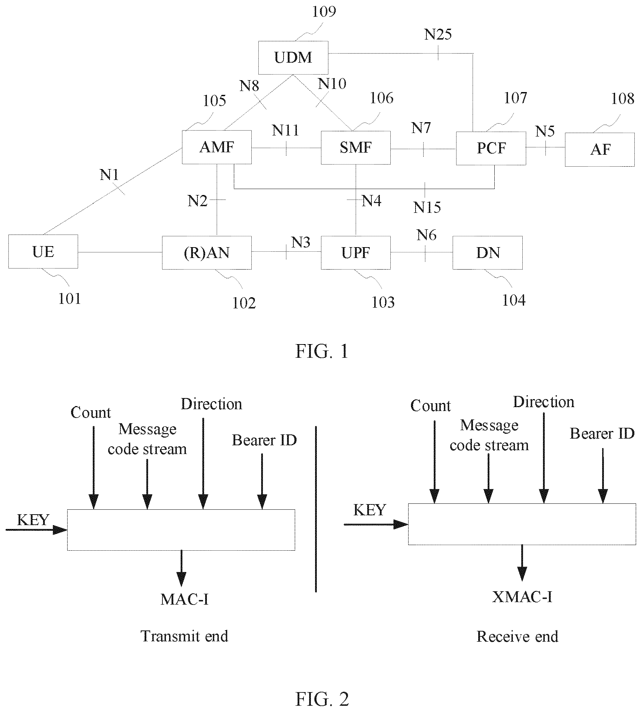

FIG. 1 shows an example of a reference point-based 5Gnetwork architecture. As shown in FIG. 1, a system may be divided into two parts: an access network and a core network. The access network is used to implement a function related to radio access, and mainly includes an access network (access network, AN) device 102. The access network device includes a radio access network (radio access network, RAN) device and another device (for example, a Wi-Fi device) that performs access through an air interface. The core network mainly includes the following several key logical network elements: a user plane function (user plane function, UPF) 103, an access and mobility management function (access and mobility management function, AMF) 105, a session management function (session management function, SMF) 106, a policy control function (policy control function, PCF) 107, and a unified data management (unified data management, UDM) function 109. The system 100 may further include one or more of user equipment (user equipment, UE) 101, a data network (data network, DN) 104, and an application function (application function, AF) 108. Interfaces between the network elements are shown in FIG. 1. It should be understood that the network elements may alternatively communicate with each other through service-oriented interfaces.

The UE may also be referred to as a terminal device. The terminal device may communicate with one or more core networks (core networks, CNs) through AN devices. The terminal device may be referred to as an access terminal, a terminal, a subscriber unit, a subscriber station, a mobile station, a remote station, a remote terminal, a mobile device, a user terminal, a wireless network device, a user agent, or a user apparatus. The terminal may be a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a computing device or another device connected to a wireless modem, a vehicle-mounted device, a wearable device, a terminal device in an internet of things, a terminal device in an internet of vehicles, a terminal device in any form in a future network, or the like.

The AN device is a device that connects the terminal device to a wireless network, and may be specifically a base station. The base station may include base stations in various forms, such as a macro base station, a micro base station (also referred to as a small cell), a relay station, and an access point. The base station may be specifically an access point (access point, AP) in a wireless local area network (wireless local area network, WLAN), a base transceiver station (base transceiver station, BTS) in a global system for mobile communications (global system for mobile communications, GSM) or code division multiple access (code division multiple access, CDMA), a NodeB (NodeB, NB) in wideband code division multiple access (wideband code division multiple access, WCDMA), an evolved NodeB (Evolved NodeB, eNB or eNodeB), a relay station, an access point, a vehicle-mounted device, or a wearable device in LTE, a next generation NodeB (next generation NodeB, gNB) in a 5G system, a base station in a future evolved public land mobile network (public land mobile network, PLMN), or the like.

The UDM has functions such as management of subscription data of a user and generation of authentication information of the user.

The AMF is mainly responsible for functions such as registration management of the UE, connection management of the UE, reachability management of the UE, access authorization and access authentication of the UE, security functionality of the UE, mobility management of the UE, network slice (network slice) selection, and SMF selection. The AMF serves as an anchor of an N1/N2 interface signaling connection, provides the SMF with routing of an N1/N2 interface session management (session management, SM) message, and maintains and manages state information of the UE. The AMF is a mobility management network element in the 5G system.

The SMF is mainly responsible for all control plane functions in session management of the UE, including UPF selection and control, internet protocol (internet protocol, IP) address assignment and management, quality of service (quality of service, QoS) management of a session, obtaining of a policy and charging control (policy and charging control, PCC) policy from the PCF, and the like. The SMF also serves as a termination of an SM part in a non-access stratum (non-access stratum, NAS) message.

The PCF has functions such as providing policy rules to control plane functional entities.

The AF may be an application server, and may belong to an operator or a third party.

The UPF is mainly responsible for processing a user packet, for example, forwarding and charging. The UPF may serve as an anchor of a protocol data unit (protocol data unit, PDU) session (session) connection, namely, a PDU session anchor (PDU session anchor, PSA), and is responsible for data packet filtering of the UE, data transmission/forwarding, rate control, charging information generation, user plane QoS handling, uplink transmission authentication, transmission class verification, downlink data packet buffering, downlink data notification triggering, and the like. The UPF may also serve as a branching point of a multi-homed (multi-homed) PDU session.

The DN is a network that provides the user with a data transmission service, for example, an IP multimedia service (IP Multi-media service, IMS) or the internet. The DN may include an application server (application server, AS). The AS is a software framework, provides an environment for running an application program, and is configured to provide the application program with services such as security, data, transaction support, load balancing, and large-scale distributed system management. The UE communicates with the AS to obtain an application packet. It should be noted that the AF is a control plane of the AS.

It should be understood that embodiments of this application are not limited to being applied to the system architecture shown in FIG. 1. For example, a communication system to which a message transmission method in embodiments of this application may be applied may include more or fewer network elements or devices. The devices or the network elements in FIG. 1 may be hardware, or may be software obtained through functional division or a combination of the hardware and the software. The devices or the network elements in FIG. 1 may communicate with each other via another device or network element.

Before the method in this application is described in detail, some concepts in this application are first briefly described.

### 1. Pseudo base station

In wireless communication, communication security is a very important factor, and relates to security assurance of user data. A pseudo base station attack is a common means to threaten wireless security. The pseudo base station is an unauthorized base station, and usually includes a simple wireless device and dedicated open-source software. The pseudo base station may simulate a target base station and send signaling to a target terminal according to a related protocol, to obtain related information of the target terminal.

A network attacker places the pseudo base station within coverage of the target base station. The pseudo base station may force nearby target UE to perform cell reselection, location update, and handover, and therefore deceive the UE and provide the UE with incorrect information, to spread viruses, implement network fraud, and so on. In addition to the foregoing hazards, the pseudo base station may further intercept communication content between the base station and the UE, to monitor private data of a user. Finally, when the pseudo base station performs a spoofing attack on the terminal, normal communication between a network and the terminal is interfered, and network performance is affected. For example, when the UE accesses the pseudo base station, an incorrect system message provided by the pseudo base station may be used. As a result, the UE cannot be paged by the network, and cannot access the network to work normally. For another example, a system message may be intercepted and unauthorizedly tampered with by the pseudo base station. As a result, the UE cannot normally communicate with the base station by using an incorrect paging parameter, UAC parameter, TAU parameter, or the like, and this finally causes a handover failure, an abnormal call drop, or the like.

In 5G, there are some new wireless communication scenarios in which 5G technologies are introduced to private networks, for example, an industrial park network, a multicast service network, or an enterprise private network in the industrial internet. In these scenarios, security problems caused by pseudo base stations are more serious. This is because UE in these scenarios has a higher security requirement. For example, if UE in the industry cannot perform normal communication, a great loss and a safety accident are caused. In addition, mobility of such UE is low, and once the UE accesses a pseudo base station, the UE cannot leave the pseudo base station within a long time period to access a normal base station.

In some scenarios, a typical pseudo base station threat to security is from a "man-in-the-middle attack". When an identity of a user terminal cannot be simply obtained, an unauthorized base station, namely, a pseudo base station, may further use unauthorized UE to transparently transmit encrypted data between authorized UE and an authorized base station in a "relay" form, to implement identity authentication. Specifically, on an uplink, the pseudo base station receives communication data of the authorized UE, and transparently transmits the communication data to the authorized base station through the unauthorized UE. On a downlink, the unauthorized UE receives communication data of the authorized base station, and "transparently forwards" the received data to the authorized UE through the pseudo base station.

In this case, it is difficult for both communication parties (that is, the authorized UE and the authorized base station) to sense the attack, and both the pseudo base station and the authorized UE can directly tamper with the data to implement the man-in-the-middle attack.

### 2. Air interface integrity protection (also briefly referred to as integrity protection)

As shown in FIG. 2, the air interface integrity protection means that a transmit end uses regularly changing parameters and transmitted data to perform an operation according to a specific rule to obtain a message integrity check code (message authentication code for integrity, MAC-I); and a receive end uses the same parameters and the same rule to calculate an expected message integrity check code XMAC-I (expected message authentication code for integrity), and checks the MAC-1 and the XMAC-I to determine whether the data is completely received, so that data integrity is protected.

Specifically, input parameters of an integrity protection algorithm include an integrity protection key KEY, a PDCP packet count COUNT, a bearer ID BEARER, a transmission direction DIRECTION, and a message itself, namely, MESSAGE. Based on these input parameters, a sender uses the integrity protection algorithm NIA to calculate a 32-bit (using a 128-bit algorithm as an example) message integrity check code MAC-I. The following explains specific meanings of the parameters:

| Parameter | Descriptions |
|---|---|
| KEY | Is an integrity protection key, which is obtained by UE from a USIM, and obtained by a gNodeB side through calculation based on a root key stored in a UDM |
| COUNT | Is a quantity of PDCP packets, where the uplink and downlink each correspond to one COUNT; and when the uplink or downlink COUNT is reversed, key update is triggered to prevent duplicate key streams |
| MESSAGE | Is a message code stream |
| DIRECTION | Indicates the uplink or downlink, where 0 indicates a direction from the UE to the gNodeB, and 1 indicates a direction from the gNodeB to the UE |
| BEARER | Is a bearer ID |
| NIA | Is an integrity protection algorithm |
| MAC-I and XMAC-I | Are integrity check codes |

Then, when sending the message, the transmit end includes the MAC-I in the message. A receive end calculates an expected check code XMAC-I of the received message in a same manner, and verifies integrity of the message by comparing the MAC-I and the XMAC-I.

### 3. RRC states and transition processes between the states

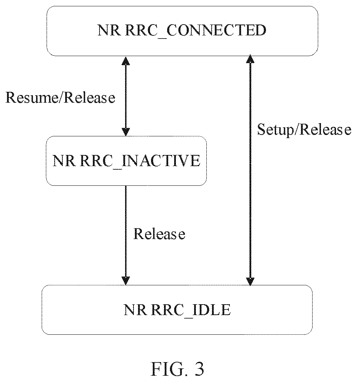

NR introduces a new RRC state, namely, an RRC_INACTIVE (radio resource control-inactive) state, and a transition relationship between the RRC_INACTIVE state, an RRC_CONNECTED (radio resource control-connected) state and an RRC_IDLE (radio resource control-idle) state is shown in FIG. 3.

The RRC INACTIVE (radio resource control-inactive) state can be changed only from the RRC_CONNECTED (radio resource control-connected) state by using an RRC release (release) message. When UE is released from the RRC_CONNECTED state to the RRC_INACTIVE state, a base station allocates an identifier I-RNTI (inactive radio network temporary identifier) to the UE and stores a context of the UE with the identifier. The base station is also referred to as a last serving gNB (last serving gNB) of the UE, and sometimes is also denoted as an anchor gNB (anchor gNB).

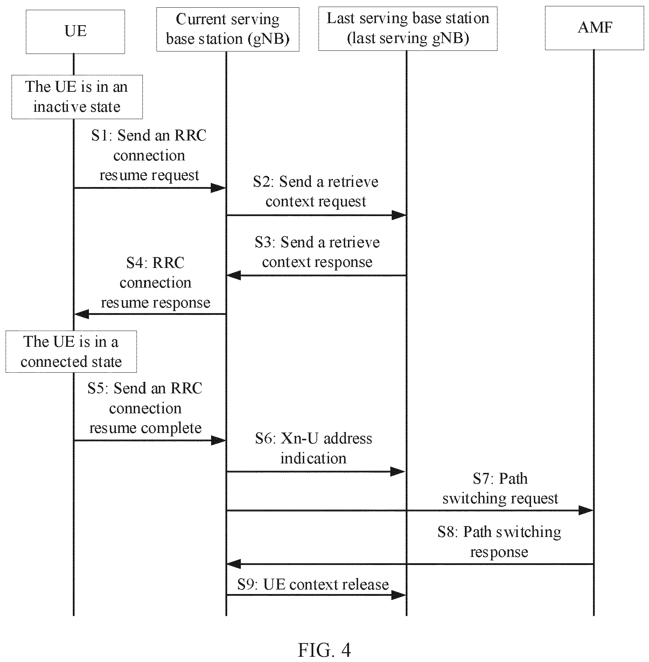

When the UE requests to resume a previously suspended RRC connection or perform RNA update, the UE sends an RRCResumeRequest message to a current serving base station. A structure of the RRCResumeRequest message includes a resume cause value, and the resume cause value indicates a resume cause of a resume request using the RRCResumeRequest message. The structure of the RRCResumeRequest message further includes the I_RNTI, and the current serving base station retrieves the context of the UE from the last serving gNB based on the I_RNTI. A specific procedure is shown in FIG. 4. The following describes steps in FIG. 4:
S1: The UE sends the RRC connection resume request RRCResumeRequst to the gNB, where the RRCResumeRequst includes the I-RNTI allocated by the last serving gNB to the UE.
S2: The gNB receives the RRCResumeRequst, and may find the last serving gNB based on a gNB identity included in the I-RNTI and request the last serving gNB to provide the context of the UE.
   Specifically, the gNB sends a retrieve context request (retrieve UE context request) message to the corresponding last serving gNB.
S3: The last serving gNB provides the gNB with the context of the UE.
   Specifically, the last serving gNB sends a retrieve context response (retrieve UE context response) message to the gNB, where the retrieve context response message includes the context of the UE.
S4/S5: The gNB completes RRC connection resumption with the UE, and user data may be sent when a grant (grant) is obtained.
S6: If downlink DL user data buffered in the last serving gNB is required to be lossless, the gNB needs to provide a forwarding address.
S7/S8: The gNB performs path switching.
S9: The gNB triggers resource release of the UE at the last serving gNB.

It should be noted that when the context of the UE cannot be retrieved, the gNB may send an RRCSetup message to the UE to reestablish an RRC connection, or the gNB may directly send an RRCReject message to the UE to reject a setup request of the UE.

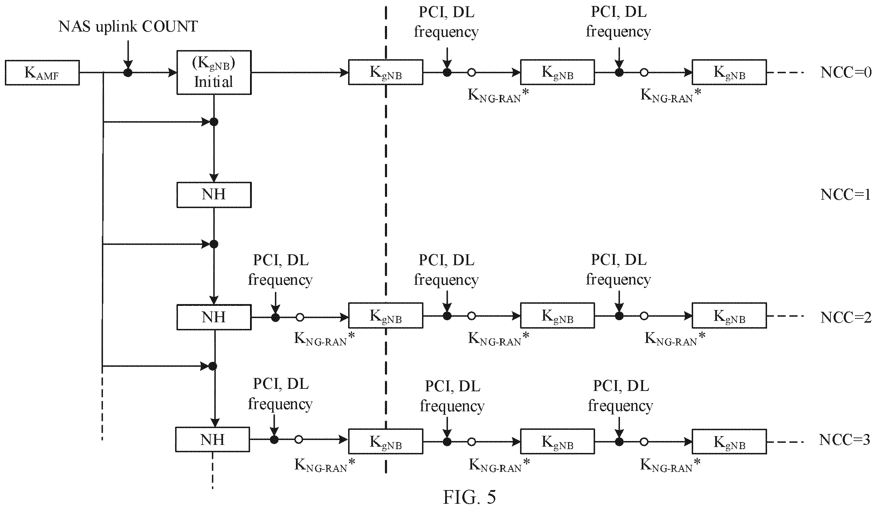

In the procedure shown in FIG. 4, to ensure access stratum security, specific security processing needs to be performed. The following parts are mainly included. That the current serving base station (gNB) is a target base station and the last serving base station (last serving gNB) is an anchor base station is used for description below.
1. When the UE is released from the connected (RRC_CONNECTED) state to the inactive (RRC_INACTIVE) state, an RRC release message sent by the base station (namely, the anchor base station) to the UE needs to carry an NCC (next hop chaining count) in addition to the I_RNTI. The NCC is used for key derivation.
2. The anchor base station deletes access stratum keys K RRCenc, K_UPenc, and K_UPint of the UE, but retains a K_RRCint. If the NCC sent by the anchor base station to the UE is new and belongs to an unused {NCC, NH} pair, the anchor base station retains the {NCC, NH} pair, and deletes a current AS (access stratum) key K_gNB. If the NCC sent by the anchor base station to the UE is associated with the current key K_gNB, the AS key K_gNB and the NCC are retained.
   As shown in FIG. 5, when the UE and a network side need to establish a connection, the UE and the network side each obtain a key K_AMF from a core network, and then derive an initial K _gNB and an NH. An NCC is associated with each pair of a K_gNB and an NH, in other words, each K_gNB is associated with an NCC corresponding to an NH that is used to derive the K_gNB. In the first step, the K_gNB is derived based on the K_AMF. Therefore, it is considered that the K_gNB is associated with an NH whose NCC value is 0. However, the NH derived in the first step is associated with an NCC value 1.
3. When the UE in the connected state receives the RRC release (release) message including the I_RNTI and the NCC from the anchor base station, the UE first verifies integrity of the RRC release message by checking a PDCP (packet data convergence protocol) MAC-I. If the verification succeeds, the UE stores the context of the UE and the received NCC, and deletes the K_RRCenc, the K UPenc, and the K_UPint, but retains the K_RRCint. If the stored NCC is irrelevant to the current K_gNB, the current K_gNB is deleted. If the stored NCC is related to the current K_gNB, the current K_gNB is retained.
4. When the UE sends the RRC connection resume request RRCResumeRequest message to enter the connected state, that is, step S1 in FIG. 4, the RRCResumeRequest message needs to carry the I_RNTI and a short MAC-I, where the short MAC-I is a 16-bit authentication message. The UE needs to use a C-RNTI (cell radio network temporary identifier) of the UE when the UE works in a source cell of the anchor base station, a PCI (physical cell identifier) of the source cell, a cell ID of a current cell, and other parameters including the K RRCint as inputs of an integrity protection algorithm, to calculate the short MAC-I.
   ResumeMAC-I/shortResumeMAC-I is a 16-bit authentication message, and is obtained through calculation by the UE by using the integrity protection algorithm (NIA or EIA) used for previous communication with a source base station (namely, the anchor base station). Inputs for the calculation include:
   Key (key), where the K_RRCint is retained;
   BEARER (bearer), which is set to 1;
   DIRECTION (direction), which is set to 1;
   COUNT (count), which is set to 1; and
   MESSAGE (message code stream), which is set to the PCI of the source cell, a cell identifier of a target cell, and the C-RNTI for working in the source cell.
5. After the target base station receives the RRCResumeRequest message sent by the UE, the target base station finds the anchor base station based on the I-RNTI, and sends a UE context request message to the anchor base station through an Xn interface between the base stations, that is, step S2 in FIG. 4. The request message includes the I-RNTI, the short MAC-I, and a cell ID of the target base station.
6. After receiving the UE context request message sent by the target base station, the anchor base station finds the stored context of the UE based on the I-RNTI. The anchor base station calculates a short MAC-I by using the previously stored K_RRCint according to a method the same as that in 4, and performs verification with the short MAC-I in the context request message sent by the target base station. If the verification succeeds, the anchor base station derives a new K_gNB* by using the cell ID of the target base station, a carrier frequency of a cell of the target base station, and the K_gNB stored on the anchor base station or an NH indicated by the NCC. The anchor base station sends the retrieve context response message to the target base station, that is, step S3 in FIG. 4. The message includes the context of the UE, the newly derived K_gNB*, and an NCC related to the K_gNB*.
7. After obtaining the context of the UE, the target base station checks whether the target base station supports integrity protection and encryption algorithms in the context. If the target base station supports the algorithms, the target base station derives a K RRCint, a K_RRCenc, a K_UPenc, and a K_UPint by using the algorithms in the context and the obtained K_gNB*.
8. After or when sending the RRCResumeRequest message to the target base station, the UE needs to use a PCI of the target cell, a frequency of the target cell, and the K_gNB or the NH identified by the stored NCC as inputs to derive the new K_gNB*, and further derive the K_RRCint, the K RRCenc, the K_UPenc, and the K_UPint based on the K_gNB*.
9. In this way, the target base station may send data to the UE by using the K RRCint, the K RRCenc, the K UPenc, and the K_UPint that are derived by the target base station, and the UE may receive, based on the K_RRCint, the K RRCenc, the K UPenc, and the K_UPint that are derived by the UE, the data sent by the target base station.

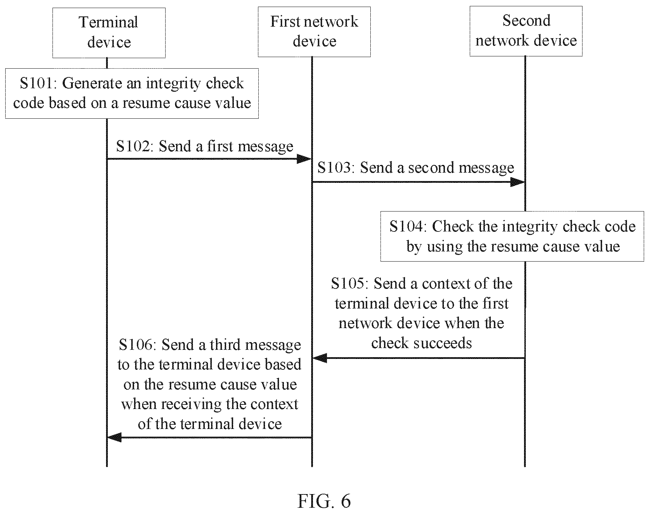

FIG. 6 is a schematic flowchart of a message transmission method according to an embodiment of this application. As shown in FIG. 6, the method may include: S101, S102, S103, and S104, and optionally, may further include S105 and S106. An execution sequence of S101, S102, S103, S104, S105, and S106 is not limited in this embodiment of this application. As shown in the figure, the message transmission method in this embodiment of this application includes but is not limited to the following steps:
S101: A terminal device generates an integrity check code based on a resume cause value, where the terminal device is in an inactive state, and the resume cause value is a resume cause indicated by a higher layer or a radio resource control RRC layer, and may be generated due to a terminal originated (mobile originated) or terminal terminated (mobile terminated) emergency, voice, or another service requirement.

In this embodiment of this application, a first network device may be a current serving base station (serving gNB) of the terminal device, and a second network device may be a last serving base station (last serving gNB) of the terminal device. The second network device stores a context of the terminal device. The first network device and the second network device may be a same device.

Before step S101, the terminal device performs capability alignment with the first network device and the second network device. Through the capability alignment, the terminal device may determine whether the first network device and the second network device support a capability of new integrity protection. The capability of new integrity protection may be a capability of performing integrity protection based on the resume cause value, to be specific, using the resume cause value as an input of an integrity protection algorithm to calculate the integrity check code. An alignment manner in which the terminal device performs capability alignment with the second network device may include but is not limited to the following two manners:
Manner 1: The terminal device actively performs capability reporting, to be specific, sends capability information to the second network device. The capability information indicates that the terminal device supports a capability of generating the integrity check code based on the resume cause value. It may be understood that the terminal device may send the capability information to the second network device when being in a connected state.

The second network device receives the capability information sent by the terminal device. If the second network device supports a capability of checking the integrity check code by using the resume cause value, the second network device may send indication information to the terminal device, where the indication information may indicate the terminal device to generate the integrity check code based on the resume cause value, or the indication information may indicate that the second network device supports the capability of checking the integrity check code by using the resume cause value, or the indication information may indicate the terminal device to enable the capability of new integrity protection. A specific indication manner of the indication information is not limited in this application.

Optionally, the indication information may be sent in the following manners: When the terminal device is in the connected state, the second network device sends the indication information by using an RRC connection reconfiguration RRCReconfiguration message. Alternatively, when the UE is released to the INACTIVE state, the second network device sends the indication information by using an RRC release RRCRelease message.

Manner 2: The second network device sends a broadcast message, where the broadcast message includes indication information, and the indication information may indicate that the second network device supports a capability of checking the integrity check code by using the resume cause value, or the indication information may indicate the terminal device to generate the integrity check code based on the resume cause value. The terminal device receives the broadcast message, to determine that the second network device supports the capability of new integrity protection.

Optionally, the terminal device may be in a connected state, the inactive state, or an idle state when receiving the broadcast message. Optionally, the broadcast message may be of an AreaScope, in other words, the broadcast message may be shared by a plurality of network devices. The terminal device may receive a broadcast message from a network device other than the second network device in the plurality of network devices, and store the broadcast message and a version value of the broadcast message. Subsequently, the terminal device receives a version value of the broadcast message from the second network device. For example, the terminal device obtains the version value of the broadcast message from scheduling information of the broadcast message, and compares the received version value of the broadcast message and the stored version value of the broadcast message. If the version values are the same, the terminal device considers that the stored broadcast message is valid for the second network device. In this case, the terminal device directly uses the locally stored broadcast message, and does not need to receive the broadcast message sent by the second network device. The broadcast message includes indication information. For specific indication content of the indication information, refer to specific descriptions in the manner 2. Details are not described herein again. The terminal device determines, based on the broadcast message, that the second network device supports the capability of new integrity protection.

In the manner 1 and the manner 2, alignment of the capability of new integrity protection can be implemented between the terminal device and the second network device. In the manner 1, the terminal device and the second network device mutually learn whether the other party supports the capability of new integrity protection. In the manner 2, the terminal device may learn that the second network device supports the capability of new integrity protection, but the second network device cannot determine whether the terminal device supports the capability of new integrity protection.

Further, a manner of performing capability alignment between the terminal device and the first network device may be as follows: When the terminal device is in the inactive state, the first network device sends a broadcast message, where the broadcast message includes indication information, and the indication information may indicate that the first network device supports the capability of performing integrity protection based on the resume cause value, or the indication information may indicate that the first network device supports a capability of forwarding the resume cause value to the second network device. Specific indication content of the indication information is not limited in this application.

Correspondingly, the terminal device receives the broadcast message sent by the first network device, and determines, based on the broadcast message, that the first network device supports the capability of performing integrity protection based on the resume cause value. For example, the terminal device may receive, when being in the inactive state, the broadcast message sent by the first network device.

Optionally, the broadcast message may be of an AreaScope. The terminal device may receive a broadcast message from a network device other than the first network device in a plurality of network devices, and store the broadcast message and a version value of the broadcast message. Subsequently, the terminal device receives a version value of the broadcast message from the first network device. For example, the terminal device obtains the version value of the broadcast message from scheduling information of the broadcast message, and compares the received version value of the broadcast message and the stored version value of the broadcast message. If the version values are the same, the terminal device considers that the stored broadcast message is valid for the first network device. In this case, the terminal device directly uses the locally stored broadcast message, and does not need to receive the broadcast message sent by the first network device. The broadcast message includes indication information. For specific indication content of the indication information, refer to specific descriptions of performing capability alignment between the terminal device and the first network device in the foregoing embodiment. Details are not described herein again. The terminal device determines, based on the broadcast message, that the first network device supports the capability of new integrity protection.

According to the foregoing steps, the terminal device determines that the first network device and the second network device support the capability of new integrity protection. When the terminal device is in the inactive state, the terminal device may request to resume an RRC connection, perform RNA update, or the like. Before the terminal device sends an RRC resume request RRCResumeRequest message, to improve transmission security of the resume cause resumeCause value and prevent a man-in-the-middle attack, the terminal device may generate the integrity check code based on the resume cause value, in other words, use the resume cause value as one of inputs of the integrity protection algorithm to calculate the integrity check code MAC-I. The resume cause value may be the resume cause indicated by the higher layer or the RRC layer. The resume cause value may indicate that the resume cause is an RNA update, resumption of a previously suspended RRC connection, or the like.

It should be noted that, if the terminal device determines that the first network device and/or the second network device do/does not support the capability of new integrity protection, the terminal device generates, by using an existing integrity protection algorithm, the integrity check code, for example, resumeMAC-I, in other words, does not use the resume cause resumeCause value as one of inputs when generating the MAC-I.

It may be understood that, for other inputs of the integrity protection algorithm, refer to the descriptions in the foregoing embodiment. For example, the inputs may further include one or more of the following several inputs:
Key (key), namely, a K RRCint;
BEARER (bearer), which is set to 1;
DIRECTION (direction), which is set to 1;
COUNT (count), which is set to 1; and
MESSAGE (message code stream), which is set to a PCI of a source cell, a cell identifier of a target cell, a C-RNTI for working in the source cell, and/or an I-RNTI allocated by the source cell to the UE.

It should be noted that this application is not limited to the capability of performing integrity protection based on the resume cause value, and the integrity protection may alternatively be performed based on another input. In other words, this application supports a capability of supporting more integrity protection inputs in addition to an existing integrity protection input.

S102: The terminal device sends a first message to the first network device, where the first message includes the resume cause value and the integrity check code.

In this embodiment of this application, after generating the integrity check code, the terminal device may send the first message to the first network device. The first message may include the resume cause value and the integrity check code. For example, the first message may be an RRCResumeRequest message, or the first message may be an RRCResumeRequest1 message. This is not limited in this application. The first message may further include the inactive radio network temporary identifier I-RNTI. It may be understood that the first message may further include other input information for generating the integrity check code.

In some optional implementations, the first message may further include indication information. The indication information indicates that the integrity check code is generated based on the resume cause value, in other words, the resume cause value is used as an input to generate the integrity check code. The indication information may be a MAC-I type indication. The first network device may determine, based on the indication information in the first message, that the integrity check code is generated based on the resume cause value. The first network device needs to forward the resume cause value to the second network device, so that the second network device checks the integrity check code by using the resume cause value.

S103: The first network device sends a second message to the second network device after receiving the first message, where the second message includes the resume cause value and the integrity check code, and the second network device is a network device that stores the context of the terminal device.

In this embodiment of this application, the first network device receives the first message sent by the terminal device, and sends the second message to the second network device that stores the context of the terminal device, to trigger the second network device to check the integrity check code by using the resume cause value, where the second message includes the resume cause value and the integrity check code.

In this application, because the resume cause value is an input for generating the integrity check code, after receiving the first message, the first network device does not directly use the resume cause value, but sends the resume cause value and the integrity check code to the second network device for check. When the check succeeds, the first network device uses the resume cause value. It should be noted that using the resume cause value means that the first network device sends a corresponding response message to the terminal device based on the resume cause indicated by the resume cause value. For example, if the resume cause indicated by the resume cause value is RRC connection resumption, and the first network device allows the terminal device to access, the first network device may send an RRC resume message to the terminal device. If the resume cause indicated by the resume cause value is an RNA update, the first network device may send an RRC release message to the terminal device.

In some optional implementations, the first message may include the indication information, where the indication information indicates that the integrity check code is generated based on the resume cause value. The first network device determines, based on the indication information, that the resume cause value is an input for generating the integrity check code, therefore send, to the second network device, the second message including the resume cause value and the integrity check code, and use the resume cause value after the check on the integrity check code succeeds.

For example, the first message is an RRCResumeRequest message, and the RRCResumeRequest message includes the I-RNTI allocated by the second network device to the terminal device. The first network device may obtain a gNB identity through parsing based on the I-RNTI to determine the second network device that stores the context of the terminal device, and request the second network device to provide the context of the terminal device. Specifically, the first network device sends the second message to the second network device, where the second message may be a request message used to obtain the context of the terminal device, for example, a retrieve UE context request message, where the retrieve UE context request message includes the resume cause value and the integrity check code that are sent by the terminal device.

In some optional implementations, the second message may also include first indication information, and the first indication information indicates that the integrity check code is generated based on the resume cause value, so that the second network device checks the integrity check code by using the resume cause value.

In some optional implementations, the second message may further include second indication information. The second indication information may be a capability indication of the second network device. The second indication information may indicate that the first network device supports the capability of performing integrity protection based on the resume cause value, or the second indication information may indicate that the first network device supports the capability of forwarding the resume cause value to the second network device. Indication content of the second indication information is not limited in this application. The second indication information may be implicitly indicated by using a type of an RRC resume cause in the retrieve UE context request message.

When the RRC resume cause in the retrieve UE context request message includes a resume cause value other than ma-Update, it implicitly indicates that the first network device supports the capability of performing integrity protection based on the resume cause value, or supports the capability of forwarding the resume cause value to the second network device.

When the resume cause value is ma-Update, it explicitly indicates with a special bit that the first network device supports the capability of performing integrity protection based on the resume cause value, or supports the capability of forwarding the resume cause value to the second network device.

It may be understood that, the second indication information may alternatively be implicitly indicated by a newly added IE, and the newly added IE includes all types of resume cause values (RRC resume causes). In this case, if the new IE indicates the resume cause value, it indicates that the first network device supports the capability of new integrity protection.

Correspondingly, the second network device determines, based on the second indication information, whether the first network device supports the capability of new integrity protection. When the first network device supports the capability of new integrity protection, step S104 is performed. When the first network device does not support the capability of new integrity protection, a conventional integrity protection algorithm is used to perform check, in other words, the resume cause value is not used to check the integrity check code.

Particularly, the second indication information may alternatively be sent and received when the first network device and the second network device establish an Xn interface, or an OAM directly sends the capability of the first network device to the second network device.

S104: The second network device checks the integrity check code by using the resume cause value.

In this embodiment of this application, the second network device receives the second message sent by the first network device, and obtains the resume cause value and the integrity check code that are included in the second message. Further, the second network device checks the integrity check code by using the resume cause value. Optionally, a specific check procedure may be as follows: The second network device uses the resume cause value as an input of the integrity protection algorithm, and other inputs may further include: Key, BEARER, DIRECTION, COUNT, and the message code stream. The message code stream includes the PCI of the source cell, the cell identifier of the target cell, the C-RNTI for working in the source cell, the I-RNTI allocated by the source cell to the UE, and the like. The source cell is a cell associated with the terminal device when the terminal device is in the connected state. The target cell may be a cell associated with the terminal device when the terminal device is currently in the inactive state. Further, the second network device uses the same integrity protection algorithm as the terminal device, to calculate an expected integrity check code XMAC-I, and verify message integrity by comparing the MAC-I and the XMAC-I. If the MAC-I is consistent with the XMAC-I, the check succeeds. It may be understood that for the other inputs of the integrity protection algorithm, refer to the descriptions of generating the MAC-I by the terminal device. This is not described herein again.

In some optional manners, if the second message includes the first indication information, the second network device may check the integrity check code based on the first indication information by using the resume cause value. If the second message does not include the first indication information, the second network device may determine, based on the capability information pre-reported by the terminal device, that the integrity check code is generated based on the resume cause value.

S105: The second network device sends the context of the terminal device to the first network device when the check succeeds.

In this embodiment of this application, the second message received by the second network device from the first network device is the retrieve UE context request message used to obtain the context of the terminal device. Optionally, the retrieve UE context request message may include a context identifier (context ID) of the terminal device. When the check of the second network device on the integrity check code succeeds, the second network device may search for the context of the terminal device based on the context ID, and send the context of the terminal device to the first network device.

S106: The first network device sends a third message to the terminal device based on the resume cause value when the first network device receives the context of the terminal device from the second network device, where the third message is a response message of the first message.

In this embodiment of this application, if receiving the context of the terminal device from the second network device, the first network device determines that the check on the integrity check code succeeds, and the resume cause value received by the first network device is not tampered with. Therefore, the first network device may send the corresponding response message, namely, the third message, to the terminal device based on the resume cause indicated by the resume cause value. For example, if the resume cause indicated by the resume cause value is the RRC connection resumption, and the first network device allows the terminal device to access, the first network device may send the RRC resume message to the terminal device. If the resume cause indicated by the resume cause value is the RNA update, the first network device may send the RRC release message to the terminal device.

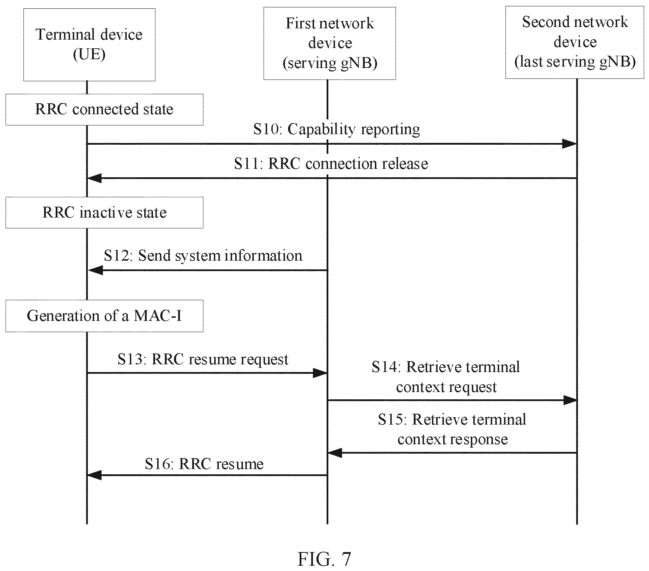

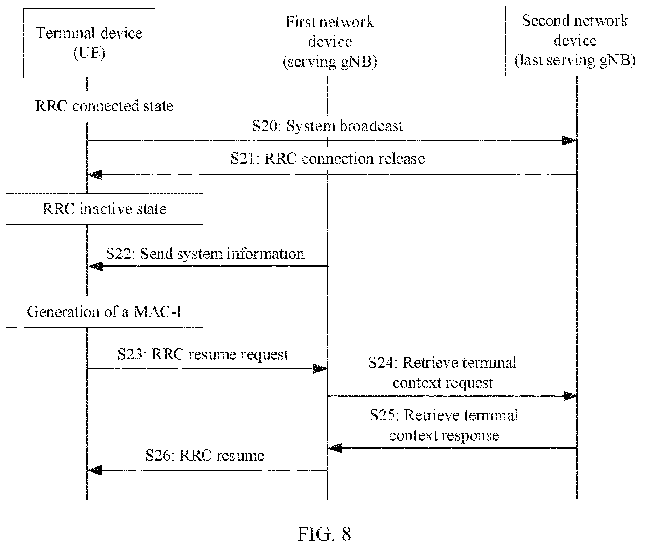

The method shown in FIG. 6 is described in more detail with reference to FIG. 7 and FIG. 8. In FIG. 7, the terminal device actively performs capability reporting. In FIG. 8, the second network device notifies, by using a system broadcast, the terminal device that the second network device supports the capability of new integrity protection. In embodiments shown in FIG. 7 and FIG. 8, an example in which the terminal device is UE, the first network device is a current serving base station (serving gNB), and the second network device is a last serving base station (last serving gNB) is used for description. The following separately describes FIG. 7 and FIG. 8.

As shown in FIG. 7, this embodiment includes but is not limited to the following steps:
S10: An RRC connection state of the UE with the last serving gNB is a CONNECTED state. In this case, a context of the UE is stored in the last serving gNB. The UE performs capability reporting to notify the last serving gNB that the current UE supports using a capability of new integrity protection, in other words, can perform integrity protection on a resume cause value in an RRCResumeRequest message. For example, inputs for generating a MAC-1 include the resume cause value in the RRCResumeRequest message.
S11: The last serving gNB enables the capability of new integrity protection of the terminal device. For example, when the UE is in the connected state, the last serving gNB uses an RRCReconfiguration message to indicate the UE to use the capability of new integrity protection; or when the UE is released to an INACTIVE state, the last serving gNB uses an RRC connection release RRCRelease message to indicate the UE to use the capability of new integrity protection, in other words, use the resume cause value in the RRCResumeRequest message as an input to generate the MAC-I.
S12: The serving gNB indicates, by using system information, that the serving gNB supports a capability of performing integrity protection based on the resume cause value. The UE learns, based on the system information, whether the serving gNB supports the capability of new integrity protection, to determine generation of the MAC-I.
   If the serving gNB supports the capability of new integrity protection, the UE performs integrity protection on the resume cause value in the RRCResumeRequest message, to be specific, uses the resume cause value as one of the inputs to generate the MAC-I. If the serving gNB does not support the capability of new integrity protection, the UE does not perform integrity protection on the resume cause value in the RRCResumeRequest message, to be specific, does not use the resume cause value as an input when generating the MAC-I.
S13: The UE sends the RRC connection resume request RRCResumeRequest to the serving gNB, where the RRCResumeRequest includes the resume cause value (cause value) and the MAC-I.
S14: The serving gNB sends a retrieve UE context request (retrieve UE context request) to the last serving gNB, where the retrieve UE context request message carries the resume cause value, the MAC-I, and a capability indication, and the capability indication indicates that the serving gNB supports the capability of new integrity protection, in other words, supports forwarding the cause value to the last serving gNB. It may be understood that the capability may alternatively be obtained in advance through Xn setup or an OAM.
   Optionally, in this embodiment, the serving gNB may forward, to the last serving gNB by using the retrieve UE context request, the resume cause value and the integrity check code in the received RRCResumeRequest.
S15: The last serving gNB receives the retrieve UE context request (retrieve UE context request), and determines, based on messages exchanged in step S10 and step S11, that the terminal device supports the capability of new integrity protection, in other words, performs integrity protection on the resume cause value.

Optionally, the last serving gNB may associate the capability of supporting new integrity protection with the UE, for example, with a context ID. In this case, when receiving the retrieve UE context request message, the last serving gNB determines, based on the context ID in the retrieve UE context request message, that the resume cause value needs to be used as an input when integrity protection verification is performed.

When checking the MAC-I, the last serving gNB uses the resume cause value as a check input to obtain an output result XMAC-I, and compares the XMAC-I and the MAC-I. If the XMAC-I is consistent with the MAC-I, the check succeeds. The last serving gNB determines, based on whether the check succeeds, whether to send the context of the UE to the serving gNB.

The last serving gNB may send the context of the UE to the serving gNB by using a retrieve UE context response message.

S16: The serving gNB receives the retrieve UE context response. If a network (the serving gNB or the last serving gNB) allows, based on the resume cause value, the UE to access, the serving gNB returns an RRC resume message to the UE, so that the UE can enter the RRC_CONNECTED state. In some optional scenarios, if the resume cause value is an RNA update ma-Update, the serving gNB may reply with an RRC release message, so that the UE still remains in the INACTIVE state.

As shown in FIG. 8, this embodiment includes but is not limited to the following steps:
S20: When an RRC connection state of the UE with the last serving gNB is a connected CONNECTED state, the UE receives a system broadcast from the last serving gNB, where the system broadcast includes a capability indication 1. The capability indication 1 may indicate that the last serving gNB supports a capability of performing integrity protection based on a resume cause value. Alternatively, the capability indication 1 indicates the UE supporting new integrity protection to generate a MAC-I based on a resume cause value, in other words, the capability indication 1 indicates to perform integrity protection on the resume cause value in an RRCResumeRequest message. For example, inputs for generating the MAC-I include the resume cause value in the RRCResumeRequest message. Optionally, the capability indication 1 may alternatively indicate that the last serving gNB supports a capability of checking a MAC-I by using a resume cause value.

It should be noted that when the UE receives the system broadcast, the RRC connection state of the UE is not limited to the connected CONNECTED state, but may be an idle IDLE state or an inactive INACTIVE state. This is not limited in this application.

A context of the UE is stored in the last serving gNB.

S21: The last serving gNB releases the UE to the inactive INACTIVE state by using an RRC connection release (RRC release) message.

S22: When the UE is in the inactive state, the serving gNB sends system information to the UE, where the system information includes a capability indication 2, and the capability indication 2 may indicate that the serving gNB supports a capability of performing integrity protection based on the resume cause value, or the capability indication 2 may indicate that the serving gNB supports a capability of new integrity protection.

The UE learns, based on the system information, whether the serving gNB supports the capability of performing integrity protection based on the resume cause value, to determine a generation manner of the MAC-I. To be specific, if the serving gNB supports the capability of performing integrity protection based on the resume cause value, the UE performs integrity protection on the resume cause value in the RRCResumeRequest message, to be specific, uses the resume cause value as an input to generate the MAC-I.

Correspondingly, when receiving the RRCResumeRequest message sent by the UE, the serving gNB does not directly use the resume cause value in the RRCResumeRequest message, but sends the MAC-I to the last serving gNB for check. If the check succeeds, the serving gNB uses the resume cause value, to be specific, sends a corresponding response message to the UE based on the resume cause value.

If the serving gNB does not support the capability of performing integrity protection based on the resume cause value, the UE does not perform integrity protection on the resume cause value in the RRCResumeRequest message, to be specific, the UE does not use the resume cause value as one of the inputs when generating the MAC-I.

Correspondingly, when receiving the RRCResumeRequest message sent by the UE, the serving gNB directly uses the resume cause value in the RRCResumeRequest message.

S23: The UE sends the RRC connection resume request RRCResumeRequest to the serving gNB, where the RRCResumeRequest includes the resume cause value, the MAC-I, and a MAC-I type indication, and the MAC-I type indication indicates that the MAC-I is generated based on the resume cause value.

It should be noted that the RRCResumeRequest message received by the serving gNB may be from UE that does not use the new integrity protection or from UE that uses the new integrity protection. Therefore, whether the MAC-I type indication is included may be used for differentiation. In this embodiment of this application, using the new integrity protection means that integrity protection is performed on the resume cause value in the RRCResumeRequest message, to be specific, the resume cause value is used as an input to generate the MAC-I.

The serving gNB may determine, based on the MAC-I type indication in the RRCResumeRequest message, whether the UE uses the new integrity protection. For example, if the RRCResumeRequest message includes the MAC-I type indication, the RRCResumeRequest message is from the UE that uses the new integrity protection. Correspondingly, when receiving the RRCResumeRequest message, the serving gNB does not directly use the resume cause value in the RRCResumeRequest message, but sends the resume cause value and the MAC-I to the last serving gNB for check, and uses the resume cause value when the check succeeds. If the RRCResumeRequest message does not include the MAC-I type indication, the RRCResumeRequest message is from the UE that does not use the new integrity protection. Correspondingly, when receiving the RRCResumeRequest message sent by the UE, the serving gNB directly uses the resume cause value in the RRCResumeRequest message.

S24: The serving gNB sends a retrieve UE context request (retrieve UE context request) message to the last serving gNB, where the retrieve UE context request message carries the resume cause value, the MAC-I, and a capability indication, and the capability indication indicates that the serving gNB supports the capability of new integrity protection, or the capability indication may indicate that the serving gNB supports the capability of performing integrity protection based on the resume cause value, in other words, the serving gNB supports a capability of forwarding a resume cause to the last serving gNB. The capability may alternatively be obtained in advance through Xn setup or an OAM.

Optionally, the retrieve UE context request message further carries a message type indication, for example, a MAC-I type indication. The MAC-I type indication may indicate whether the MAC-1 is generated based on the resume cause value, in other words, indicate whether the MAC-I is from the UE that supports the new integrity protection, or the MAC-I type indication may indicate whether the MAC-I is obtained after performing integrity protection on the resume cause value.

S25: The last serving gNB receives the retrieve UE context request message sent by the serving gNB, and determines, based on the message type indication in the retrieve UE context request message, whether to use the resume cause value as a check input when checking the MAC-I.

If the message type indication indicates that the MAC-I is obtained after performing integrity protection on the resume cause value, the last serving gNB uses the resume cause value as a check input when checking the MAC-I. Otherwise, the resume cause value is not used as a check input. The last serving gNB generates an XMAC-I by using a same integrity protection algorithm as the UE, compares the XMAC-I and the MAC-I, and determines, based on a comparison result, whether the check succeeds.

If the check succeeds, the last serving gNB determines to send the context of the UE to the serving gNB. Specifically, the last serving gNB sends a retrieve UE context response (retrieve UE context response) message to the serving gNB, where the retrieve UE context response message includes the context of the UE.

S26: The serving gNB obtains the context of the UE. If the serving gNB or the last serving gNB allows, based on the resume cause value, the UE to access, the serving gNB returns an RRC resume (RRC resume) message to the UE, so that the UE can enter the RRC_CONNECTED state. Optionally, if the resume cause value is ma-Update, namely, an RNA update, after the check succeeds, the serving gNB may send an RRC release message to the UE, so that the UE still remains in the INACTIVE state.

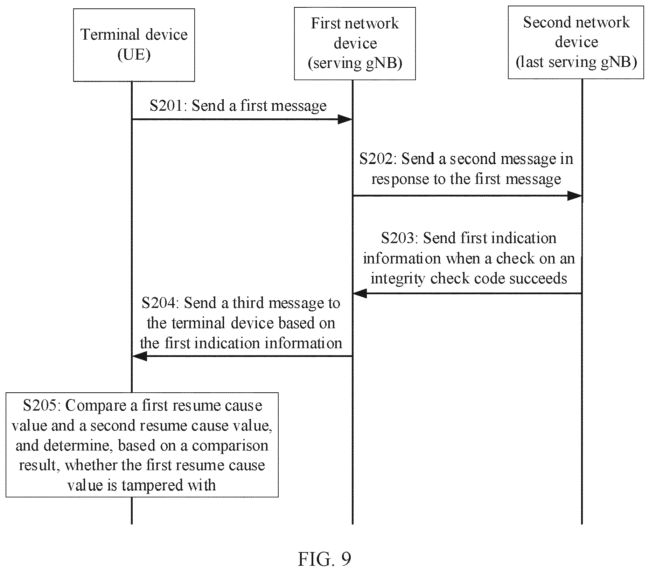

FIG. 9 is a schematic flowchart of a message transmission method according to an embodiment of this application. As shown in FIG. 9, the method may include S201 to S205. An execution sequence of S201 to S205 is not limited in this embodiment of this application. As shown in the figure, the message transmission method in this embodiment of this application includes but is not limited to the following steps:
S201: A terminal device sends a first message to a first network device, where the first message includes a first resume cause value and an integrity check code, the terminal device is in an inactive state, and the first resume cause value is a resume cause indicated by a high layer or a radio resource control RRC layer.

In this embodiment of this application, the first network device may be a current serving base station (serving gNB) of the terminal device, and a second network device may be a last serving base station (last serving gNB) of the terminal device. The second network device stores a context of the terminal device.

In some embodiments, before step S201, when the terminal device is in a connected state, the terminal device may perform capability indication to the first network device. For example, the terminal device sends indication information to the second network device, where the indication information indicates that the terminal device verifies whether the resume cause value is tampered with.

Further, the second network device sends an RRC connection release message to the terminal device, so that the terminal device is switched from the connected state to the inactive state.

When the terminal device is in the inactive state, the terminal device sends the first message to the first network device. The first message may be an RRCResumeRequest message or an RRCResumeRequest1 message. The first message includes the first resume cause value and the integrity check code MAC-I, and inputs for generating the integrity check code MAC-I may include:
Key (key), namely, a K RRCint; BEARER (bearer), which is set to 1; DIRECTION (direction), which is set to 1; COUNT (count), which is set to 1; and MESSAGE (message code stream), which is set to a PCI of a source cell, a cell identifier of a target cell, and a C-RNTI for working in the source cell.

S202: The first network device sends a second message to the second network device in response to the first message, where the second message includes the integrity check code, and the second network device is a network device that stores the context of the terminal device.

In this embodiment of this application, the first message may include an I-RNTI of the terminal device. The first network device determines, based on the I-RNTI, the second network device that stores the context of the terminal device, and sends the second message to the second network device. Optionally, the second message may include the integrity check code MAC-I sent by the terminal device. For example, the second message may be a request message used to request the context of the terminal device. For example, the second message may be a retrieve UE context request message.

In some optional implementations, if the first resume cause value indicates an RNA update, the second message may further include a resume cause value received by the first network device. It should be noted that a man-in-the-middle attack may exist between the terminal device and the first network device, and the first resume cause value in the first message sent by the terminal device may be tampered with. Therefore, for ease of description, the resume cause value included in the first message received by the first network device is referred to as a second resume cause value in this application.

S203: The second network device sends first indication information to the first network device when a check of the second network device on the integrity check code succeeds, where the first indication information indicates the first network device to send a message including the resume cause value to the terminal device.

In this embodiment of this application, the second network device receives the second message sent by the first network device, and obtains the integrity check code MAC-I in the second message. The second network device checks the MAC-I to obtain a check result. For example, the second network device performs integrity protection calculation on inputs by using a same integrity protection algorithm as the terminal device, to obtain an XMAC-I. Types of input parameters may be the same as types of input parameters used by the UE to generate the MAC-I. The second network device compares the MAC-I and the XMAC-I, and determines, based on a comparison result, whether the check on the MAC-I succeeds.

If the check on the MAC-I succeeds, the second network device sends the context of the terminal device to the first network device. Further, the second network device determines, based on a capability indication reported by the terminal device, that the terminal device can perform local tampering verification on the resume cause value. Therefore, the second network device sends the first indication information to the first network device. The first indication information indicates the first network device to send the message including the resume cause value to the terminal device, in other words, indicates the first network device to send the received resume cause value to the terminal device, so that the terminal device verifies whether the resume cause value is tampered with.

For example, the second message may be a retrieve terminal device context response (retrieve UE context response) message, and the retrieve UE context response may include a message indicating the first network device to send the message including the resume cause value to the terminal device.

S204: The first network device sends a third message to the terminal device based on the first indication information, where the third message includes the second resume cause value.

In this embodiment of this application, the first network device receives the second message sent by the terminal device, obtains the first indication information in the second message, and sends the third message to the terminal device based on the first indication information, where the third message includes the second resume cause value received by the first network device.

For example, the third message may be an RRC connection resume (RRC resume) message or an RRC connection release (RRC release) message.

S205: The terminal device compares the first resume cause value and the second resume cause value, and determines, based on a comparison result, whether the first resume cause value is tampered with.

In this embodiment of this application, the terminal device compares the received second resume cause value and the first resume cause value sent by the terminal device to the first network device. If the second resume cause value is consistent with the first resume cause value, it indicates that the resume cause value received by the first network device is not tampered with. The terminal device performs a corresponding operation based on the received third message. For example, if the third message is an RRC resume message, the terminal device successfully accesses a network and is switched to the connected state. If the third message is an RRC release message, the terminal device is switched to an idle state or the inactive state.

If the second resume cause value is inconsistent with the first resume cause value, it indicates that the resume cause value received by the first network device has been tampered with, and the terminal device may remain in a current state and record the information, to facilitate subsequent MDT reporting, or the terminal device attempts to resume an RRC connection again.

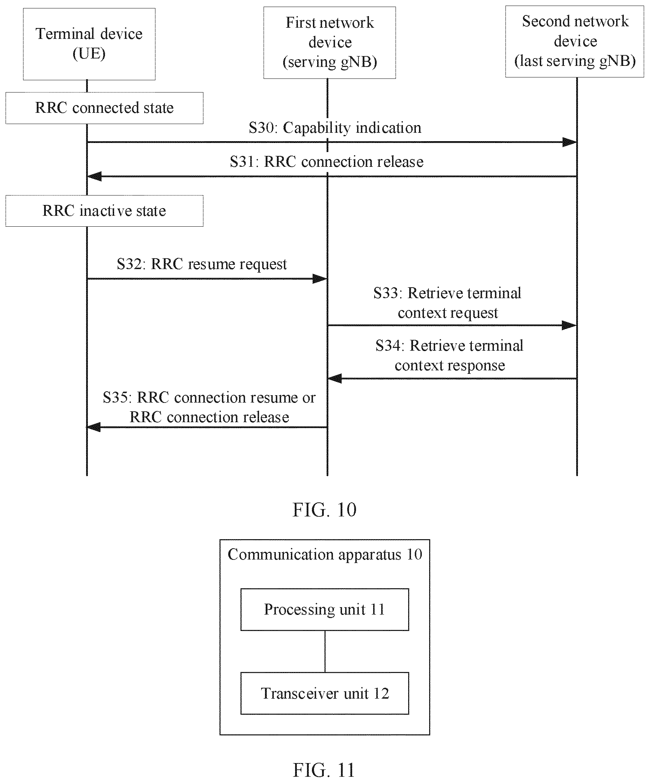

The method shown in FIG. 9 is described in more detail with reference to FIG. 10. In an embodiment shown in FIG. 10, the first network device may be a current serving base station (serving gNB) of the terminal device, and the second network device may be a last serving base station (last serving gNB). The following describes FIG. 10:
S30: UE sends a capability indication to the last serving gNB.

Specifically, optionally, an RRC connection state of the UE with the last serving gNB is a CONNECTED state. In this case, a context of the UE is stored in the last serving gNB. The UE performs capability indication by using an RRC message, to indicate, to the last serving gNB, that the current UE supports tampering verification on a resume cause value. To be specific, the last serving gNB needs to indicate, to the serving gNB, that an RRCResume or an RRCRelease sent to the UE needs to carry a resume cause value, to help the UE perform local tampering verification. Alternatively, correspondingly, the UE may determine, based on a resume cause value in an RRC resume/RRC release message or another response message received in a connection resume process, whether the resume cause value in a connection resume request sent by the UE is tampered with.

The RRC message may include but is not limited to: an RRC connection setup complete RRCSetupComplete message, an RRC connection setup request RRCSetupRequest message, an RRC connection reestablishment request RRCReestablishmentRequest message, and the like.

S31: The last serving gNB releases the UE to an INACTIVE state by using an RRC connection release RRCRelease message.

S32: When the UE is in the INACTIVE state, the UE sends an RRC connection resume request RRCResumeRequest to the serving gNB, where the RRCResumeRequest includes the resume cause value and a MAC-I.

It may be understood that the serving gNB needs to support sending of a new RRC resume or RRC release message, in other words, the RRC resume or RRC release message carries a resume cause value received by the serving gNB.

S33: The serving gNB sends a retrieve UE context request (retrieve UE context request) message to the last serving gNB, where the retrieve UE context request message carries the MAC-I. Optionally, if the resume cause value indicates an RNA update, the retrieve UE context request message may further include the resume cause value.

S34: The last serving gNB receives the retrieve UE context request message sent by the serving gNB, and checks the MAC-I in the message. If the check succeeds, the last serving gNB sends a retrieve UE context response message to the serving gNB, where the retrieve UE context response message includes the context of the UE.

Further, the last serving gNB determines, based on the capability indication sent by the UE in step S30, that the serving gNB needs to be indicated to send the new RRC resume or RRC release message, where the new message carries the resume cause value. Therefore, the retrieve UE context response message further needs to include indication information used to indicate the serving gNB to send the RRC resume or RRC release message including the resume cause value.

S35: The serving gNB receives the retrieve UE context response message sent by the last serving gNB, and sends, to the UE based on the indication information in the message, the RRC resume or RRC release message including the resume cause value, where the resume cause value is the resume cause value received by the serving gNB from the terminal device.

Specifically, optionally, the UE receives the resume cause value sent by the serving gNB, and compares the received resume cause value and the resume cause value in the RRCResumeRequest message. If the resume cause values are consistent, it indicates that there is no man-in-the-middle attack, and the UE can trust the RRC resume or RRC release message sent by the serving gNB. Correspondingly, if the UE receives the RRC resume message, the UE sends an RRC connection resume complete RRCResumeComplete message to the serving gNB, to successfully access a network. If the UE receives the RRC release message, the UE is in the INACTIVE state or an IDLE state. In this case, the UE completes an RRC connection resume process.

If the resume cause value received by the UE is inconsistent with the resume cause value in the RRCResumeRequest message, it indicates that a man-in-the-middle attack exists. Optionally, the UE may choose to remain in a current state and record information, to facilitate subsequent MDT reporting, or attempt to resume an RRC connection again.

The foregoing describes in detail methods provided in embodiments of this application with reference to FIG. 6 and FIG. 10. The following describes in detail apparatuses provided in embodiments of this application with reference to FIG. 11 to FIG. 13.

It may be understood that, to implement functions in the foregoing embodiments, the first network device, the second network device, and the terminal device include corresponding hardware structures and/or software modules for performing the functions. A person skilled in the art should easily be aware that, in combination with the units and the method steps in the examples described in embodiments disclosed in this application, this application can be implemented by hardware, software, or a combination of hardware and software. Whether a function is performed by hardware, software, or hardware driven by computer software depends on particular applications and design constraints of the technical solutions.

FIG. 11 is a schematic block diagram of a communication apparatus according to an embodiment of this application. As shown in FIG. 11, the communication apparatus 10 may include a processing unit 11 and a transceiver unit 12. The processing unit 11 and the transceiver unit 12 may be software, hardware, or a combination of software and hardware.

The transceiver unit 12 may include a sending unit and a receiving unit. The sending unit is configured to implement a sending function, and the receiving unit is configured to implement a receiving function, so that the transceiver unit 12 may implement the sending function and/or the receiving function. The transceiver unit may alternatively be described as a communication unit.

Optionally, the transceiver unit 12 may be configured to receive information sent by another apparatus, and may be further configured to send information to another apparatus. The processing unit 11 may be configured to perform internal processing of the apparatus.

In a possible design, the communication apparatus 10 may correspond to the first network device in the method embodiment of FIG. 6. For example, the communication apparatus 10 may be the first network device, or may be a chip in the first network device. The communication apparatus 10 may include units configured to perform the operations performed by the first network device in the method embodiment of FIG. 6. In addition, the units in the communication apparatus 10 are separately configured to implement the operations performed by the first network device in the method embodiment of FIG. 6.

For example, the transceiver unit 12 is configured to receive a first message from a terminal device, where the first message includes a resume cause value and an integrity check code, the integrity check code is generated based on the resume cause value, the terminal device is in an inactive state, and the resume cause value is a resume cause indicated by a higher layer or a radio resource control RRC layer.

The processing unit 11 is configured to control the transceiver unit 12 to send a second message to a second network device, where the second message includes the resume cause value and the integrity check code, and the second network device is a network device that stores a context of the terminal device.

Optionally, the second message is used to request to obtain the context of the terminal device.

The transceiver unit 12 is further configured to send a third message to the terminal device based on the resume cause value when receiving the context of the terminal device from the second network device, where the third message is a response message of the first message.

Optionally, the first message further includes first indication information, and the first indication information indicates that the integrity check code is generated based on the resume cause value.

Optionally, the second message further includes second indication information, and the second indication information indicates that the integrity check code is generated based on the resume cause value.

Optionally, the transceiver unit 12 is further configured to send a broadcast message, where the broadcast message includes third indication information, and the third indication information indicates that the first network device supports a capability of performing integrity protection based on the resume cause value.

Optionally, the second message further includes fourth indication information, and the fourth indication information indicates that the first network device supports the capability of performing integrity protection based on the resume cause value.

In a possible design, the communication apparatus 10 may correspond to the second network device in the method embodiment of FIG. 6. For example, the communication apparatus 10 may be the second network device, or may be a chip in the second network device. The communication apparatus 10 may include units configured to perform the operations performed by the second network device in the method embodiment of FIG. 6. In addition, the units in the communication apparatus 10 are separately configured to implement the operations performed by the second network device in the method embodiment of FIG. 6.

For example, the transceiver unit 12 is configured to receive a second message from a first network device, where the second message is triggered when the first network device receives a resume cause value and an integrity check code that are sent by a terminal device, the second message includes the resume cause value and the integrity check code, the terminal device is in an inactive state, and the resume cause value is a resume cause indicated by a higher layer or a radio resource control RRC layer.

The processing unit 11 is configured to check the integrity check code by using the resume cause value.

Optionally, the second message is used to request to obtain a context of the terminal device.

The transceiver unit 12 is further configured to send the context of the terminal device to the first network device when the check succeeds.

Optionally, the second message further includes second indication information, and the second indication information indicates that the integrity check code is generated based on the resume cause value.

The processing unit 11 is specifically configured to check the integrity check code based on the second indication information by using the resume cause value.

Optionally, the transceiver unit 12 is further configured to send a broadcast message, where the broadcast message includes fifth indication information, and the fifth indication information indicates that the second network device supports a capability of checking the integrity check code by using the resume cause value, or indicates the terminal device to generate the integrity check code based on the resume cause value.

Optionally, the transceiver unit 12 is further configured to receive capability information from the terminal device, where the capability information indicates that the terminal device supports a capability of generating the integrity check code based on the resume cause value.

The transceiver unit 12 is further configured to send sixth indication information to the terminal device in response to the capability information, where the sixth indication information indicates the terminal device to generate the integrity check code based on the resume cause value.

In a possible design, the communication apparatus 10 may correspond to the terminal device in the method embodiment of FIG. 6. For example, the communication apparatus 10 may be the terminal device, or may be a chip in the terminal device. The communication apparatus 10 may include units configured to perform the operations performed by the terminal device in the method embodiment of FIG. 6. In addition, the units in the communication apparatus 10 are separately configured to implement the operations performed by the terminal device in the method embodiment of FIG. 6.

For example, the processing unit 11 is configured to generate an integrity check code based on a resume cause value, where the terminal device is in an inactive state, and the resume cause value is a resume cause indicated by a higher layer or a radio resource control RRC layer.

The transceiver unit 12 is configured to send a first message to a first network device, where the first message includes the resume cause value and the integrity check code.

Optionally, the first message further includes first indication information, and the first indication information indicates that the integrity check code is generated based on the resume cause value.

Optionally, the transceiver unit 12 is further configured to receive third indication information from the first network device, where the third indication information indicates that the first network device supports a capability of performing integrity protection based on the resume cause value.

The processing unit 11 is specifically configured to generate the integrity check code based on the resume cause value in response to the third indication information.

Optionally, the transceiver unit 12 is further configured to receive fifth indication information from a second network device, where the fifth indication information indicates that the second network device supports a capability of checking the integrity check code by using the resume cause value, or indicates the terminal device to generate the integrity check code based on the resume cause value, and the second network device is a network device that stores a context of the terminal device.

The processing unit 11 is specifically configured to generate the integrity check code based on the resume cause value in response to the third indication information and the fifth indication information.

Optionally, the transceiver unit 12 is further configured to send capability information to a second network device, where the capability information indicates that the terminal device supports a capability of generating the integrity check code based on the resume cause value, and the second network device is a network device that stores a context of the terminal device.

The transceiver unit 12 is further configured to receive sixth indication information from the second network device, where the sixth indication information indicates the terminal device to generate the integrity check code based on the resume cause value.

The processing unit 11 is specifically configured to generate the integrity check code based on the resume cause value in response to the third indication information and the sixth indication information.

In a possible design, the communication apparatus 10 may correspond to the terminal device in the method embodiment of FIG. 9. For example, the communication apparatus 10 may be the terminal device, or may be a chip in the terminal device. The communication apparatus 10 may include units configured to perform the operations performed by the terminal device in the method embodiment of FIG. 9. In addition, the units in the communication apparatus 10 are separately configured to implement the operations performed by the terminal device in the method embodiment of FIG. 9.

For example, the transceiver unit 12 is configured to send a first message to a first network device, where the first message includes a first resume cause value, the terminal device is in an inactive state, and the first resume cause value is a resume cause indicated by a higher layer or a radio resource control RRC layer.

The transceiver unit 12 is further configured to receive a second message from the first network device, where the second message includes a second resume cause value.

The processing unit 11 is configured to: compare the first resume cause value and the second resume cause value, and determine, based on a comparison result, whether the first resume cause value is tampered with.

Optionally, the first message is an RRC connection resume request message, and the second message is an RRC connection resume message or an RRC connection release message.

In a possible design, the communication apparatus 10 may correspond to the first network device in the method embodiment of FIG. 9. For example, the communication apparatus 10 may be the first network device, or may be a chip in the first network device. The communication apparatus 10 may include units configured to perform the operations performed by the first network device in the method embodiment of FIG. 9. In addition, the units in the communication apparatus 10 are separately configured to implement the operations performed by the first network device in the method embodiment of FIG. 9.

For example, the transceiver unit 12 is configured to receive a first message from a terminal device, where the first message includes a first resume cause value and an integrity check code, and the terminal device is in an inactive state.

The processing unit 11 is configured to control the transceiver unit 12 to send a second message to a second network device, where the second message includes the integrity check code, and the second network device is a network device that stores a context of the terminal device.

The transceiver unit 12 is further configured to send a third message to the terminal device when a check of the second network device on the integrity check code succeeds, where the third message includes the first resume cause value.

Optionally, the second message is used to request to obtain the context of the terminal device.

The transceiver unit 12 is further configured to send the third message to the terminal device when receiving the context of the terminal device from the second network device.

Optionally, the transceiver unit 12 is further configured to receive first indication information from the second network device, where the first indication information indicates the first network device to send the third message including the first resume cause value to the terminal device.

Optionally, the transceiver unit 12 is further configured to send the third message to the terminal device based on the first indication information.

In a possible design, the communication apparatus 10 may correspond to the second network device in the method embodiment of FIG. 9. For example, the communication apparatus 10 may be the second network device, or may be a chip in the second network device. The communication apparatus 10 may include units configured to perform the operations performed by the second network device in the method embodiment of FIG. 9. In addition, the units in the communication apparatus 10 are separately configured to implement the operations performed by the second network device in the method embodiment of FIG. 9.

For example, the transceiver unit 12 is configured to receive a first message from a first network device, where the first message is triggered when the second network device receives a first resume cause value and an integrity check code that are sent by a terminal device, the first message includes the integrity check code, and the terminal device is in an inactive state.

The processing unit 11 is configured to check the integrity check code.

The transceiver unit 12 is further configured to send first indication information to the first network device when a check on the integrity check code succeeds, where the first indication information indicates the first network device to send a message including the first resume cause value to the terminal device.

Optionally, the transceiver unit 12 is further configured to receive second indication information from the terminal device, where the second indication information indicates the terminal device to verify whether a resume cause value is tampered with.

The transceiver unit is further configured to send the first indication information to the first network device based on the second indication information.

Optionally, the first message is used to request to obtain a context of the terminal device.

The transceiver unit is specifically configured to send the first indication information and the context of the terminal device to the first network device when the check on the integrity check code succeeds.

It should be understood that when the communication apparatus 10 is a chip configured on the first network device, the second network device, or the terminal device, the transceiver unit 12 in the communication apparatus 10 may be an input/output interface.

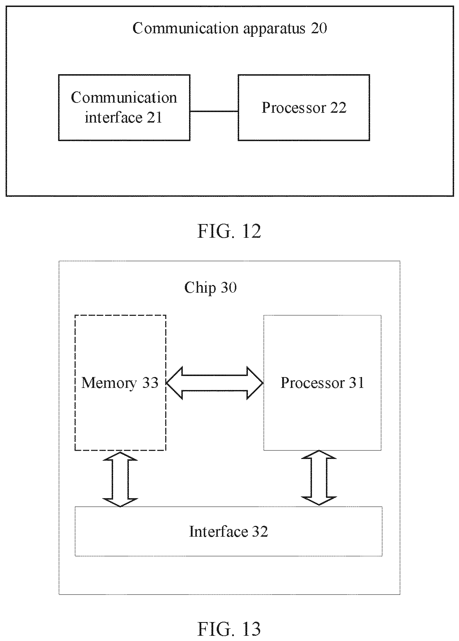

It should be understood that when the communication apparatus 10 is the first network device, the second network device, or the terminal device, the transceiver unit 12 in the communication apparatus 10 may correspond to a communication interface 21 shown in FIG. 12, and the processing unit 11 may correspond to a processor 22 shown in FIG. 12.

FIG. 12 is a schematic diagram of a structure of a communication apparatus according to an embodiment of this application. It should be understood that the communication apparatus 20 shown in FIG. 12 is merely an example. The communication apparatus in this embodiment of this application may further include another component, or include a component with a function similar to that of each component in FIG. 12, or does not necessarily need to include all components in FIG. 12.

The communication apparatus 20 includes a communication interface 21 and at least one processor 22.

The communication apparatus 20 may correspond to any network element or device in a first network device, a second network device, or a terminal device. The communication interface 21 is configured to receive and send signals, and the at least one processor 22 executes program instructions, so that the communication apparatus 20 implements a corresponding procedure of the method performed by a corresponding network element in the foregoing method embodiments.

In a possible design, the communication apparatus 20 may correspond to the first network device in the method embodiment of FIG. 6. For example, the communication apparatus 20 may be the first network device, or may be a chip in the first network device. The communication apparatus 20 may include components configured to perform the operations performed by the first network device in the foregoing method embodiment. In addition, the components in the communication apparatus 10 are separately configured to implement the operations performed by the first network device in the foregoing method embodiment.

For example, the communication interface 21 is configured to receive a first message from a terminal device, where the first message includes a resume cause value and an integrity check code, the integrity check code is generated based on the resume cause value, the terminal device is in an inactive state, and the resume cause value is a resume cause indicated by a higher layer or a radio resource control RRC layer.

The processor 22 is configured to: respond to the first message, and control the communication interface 21 to send a second message to a second network device, where the second message includes the resume cause value and the integrity check code, and the second network device is a network device that stores a context of the terminal device.

In a possible design, the communication apparatus 20 may correspond to the second network device in the method embodiment of FIG. 6. For example, the communication apparatus 20 may be the second network device, or may be a chip in the second network device. The communication apparatus 20 may include components configured to perform the operations performed by the second network device in the foregoing method embodiment. In addition, the components in the communication apparatus 10 are separately configured to implement the operations performed by the second network device in the foregoing method embodiment.

For example, the communication interface 21 is configured to receive a second message from a first network device, where the second message is triggered when the first network device receives a resume cause value and an integrity check code that are sent by a terminal device, the second message includes the resume cause value and the integrity check code, the terminal device is in an inactive state, and the resume cause value is a resume cause indicated by a higher layer or a radio resource control RRC layer.

The processor 22 is configured to check the integrity check code by using the resume cause value.

In a possible design, the communication apparatus 20 may correspond to the terminal device in the method embodiment of FIG. 6. For example, the communication apparatus 20 may be the terminal device, or may be a chip in the terminal device. The communication apparatus 20 may include components configured to perform the operations performed by the terminal device in the foregoing method embodiment. In addition, the components in the communication apparatus 10 are separately configured to implement the operations performed by the terminal device in the foregoing method embodiment.

For example, the processor 22 is configured to generate an integrity check code based on a resume cause value, where the terminal device is in an inactive state, and the resume cause value is a resume cause indicated by a higher layer or a radio resource control RRC layer.

The communication interface 21 is configured to send a first message to a first network device, where the first message includes the resume cause value and the integrity check code.

In a possible design, the communication apparatus 20 may correspond to the terminal device in the method embodiment of FIG. 9. For example, the communication apparatus 20 may be the terminal device, or may be a chip in the terminal device. The communication apparatus 20 may include components configured to perform the operations performed by the terminal device in the foregoing method embodiment. In addition, the components in the communication apparatus 10 are separately configured to implement the operations performed by the terminal device in the foregoing method embodiment.

For example, the communication interface 21 is configured to send a first message to a first network device, where the first message includes a first resume cause value, the terminal device is in an inactive state, and the first resume cause value is a resume cause indicated by a higher layer or a radio resource control RRC layer.

The communication interface 21 is configured to receive a second message from the first network device, where the second message includes a second resume cause value.

The processor 22 is configured to: compare the first resume cause value and the second resume cause value, and determine, based on a comparison result, whether the first resume cause value is tampered with.

In a possible design, the communication apparatus 20 may correspond to the first network device in the method embodiment of FIG. 9. For example, the communication apparatus 20 may be the first network device, or may be a chip in the first network device. The communication apparatus 20 may include components configured to perform the operations performed by the first network device in the foregoing method embodiment. In addition, the components in the communication apparatus 10 are separately configured to implement the operations performed by the first network device in the foregoing method embodiment.

For example, the communication interface 21 is configured to receive a first message from a terminal device, where the first message includes a first resume cause value and an integrity check code, and the terminal device is in an inactive state.

The processor 22 is configured to: respond to the first message, and control the communication interface 21 to send a second message to a second network device, where the second message includes the integrity check code, and the second network device is a network device that stores a context of the terminal device.

The communication interface 21 is configured to send a third message to the terminal device when a check of the second network device on the integrity check code succeeds, where the third message includes the first resume cause value.

In a possible design, the communication apparatus 20 may correspond to the second network device in the method embodiment of FIG. 9. For example, the communication apparatus 20 may be the second network device, or may be a chip in the second network device. The communication apparatus 20 may include components configured to perform the operations performed by the second network device in the foregoing method embodiment. In addition, the components in the communication apparatus 10 are separately configured to implement the operations performed by the second network device in the foregoing method embodiment.

For example, the communication interface 21 is configured to receive a first message from a first network device, where the first message is triggered when the second network device receives a first resume cause value and an integrity check code that are sent by a terminal device, the first message includes the integrity check code, and the terminal device is in an inactive state.

The processor 22 is configured to check the integrity check code.

The communication interface 21 is configured to send first indication information to the first network device when a check on the integrity check code succeeds, where the first indication information indicates the first network device to send a message including the first resume cause value to the terminal device.

Optionally, the communication apparatus 20 may further include a memory. The memory may store the program instructions, and the at least one processor 22 may read the program instructions stored in the memory and execute the program instructions.

For a case in which the communication apparatus is a chip or a chip system, refer to a schematic diagram of a structure of a chip in FIG. 13. The chip 30 shown in FIG. 13 includes a processor 31 and an interface 32. There may be one or more processors 31, and there may be a plurality of interfaces 32. It should be noted that functions separately corresponding to the processor 31 and the interface 32 may be implemented by using a hardware design, may be implemented by using a software design, or may be implemented by using a combination of software and hardware. This is not limited herein.

Optionally, the chip may further include a memory 33, and the memory 33 is configured to store necessary program instructions and data.

In this application, the processor 31 may be configured to: invoke, from the memory, an implementation program of the message transmission method provided in one or more embodiments of this application for one or more devices or network elements in a first network device, a second network device, or a terminal device, and execute instructions included in the program. The interface 32 may be configured to output an execution result of the processor 31. In this application, the interface 32 may be specifically configured to output messages or information of the processor 31. For the message transmission method provided in one or more embodiments of this application, refer to the embodiments shown in FIG. 6 to FIG. 10. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or the like. The general-purpose processor may be a microprocessor, or the processor may be any conventional processor or the like.

Based on the methods provided in embodiments of this application, this application further provides a computer program product. The computer program product includes computer program code. When the computer program code is run on a computer, the computer is enabled to perform the method on a first network device side, a second network device side, or a terminal device side in any one of the foregoing method embodiments.

Another embodiment of this application further provides a communication system. The communication system includes a first network device and a second network device. Optionally, the communication system may further include a terminal device. For example, the first network device, the second network device, and the terminal device may be the first network device, the second network device, and the terminal device provided in either of the embodiments of FIG. 11 and FIG. 12, and are configured to perform the steps performed by corresponding network elements in any one of the embodiments of FIG. 6 to FIG. 8.

Another embodiment of this application further provides a communication system. The communication system includes a first network device and a terminal device. Optionally, the communication system may further include a second network device. For example, the first network device, the second network device, and the terminal device may be the first network device, the second network device, and the terminal device provided in either of the embodiments of FIG. 11 and FIG. 12, and are configured to perform the steps performed by corresponding network elements in either of the embodiments of FIG. 9 and FIG. 10.

An embodiment of this application further provides a processing apparatus. The apparatus includes a processor and an interface. The processor is configured to perform the method in any one of the foregoing method embodiments.

It should be understood that the processing apparatus may be a chip. For example, the processing apparatus may be a field programmable gate array (field programmable gate array, FPGA), may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, or a discrete hardware component, or may be a system on chip (system on chip, SoC), or may be a central processing unit (central processing unit, CPU), or may be a network processor (network processor, NP), or may be a digital signal processing circuit (digital signal processor, DSP), or may be a micro controller (micro controller unit, MCU), or may be a programmable controller (programmable logic device, PLD) or another integrated chip. The processing apparatus may implement or perform the methods, steps, and logical block diagrams that are disclosed in embodiments of this application. The general-purpose processor may be a microprocessor, or the processor may be any conventional processor or the like. The steps of the methods disclosed with reference to embodiments of this application may be directly performed and completed by a hardware decoding processor, or may be performed and completed by using a combination of hardware in the decoding processor and a software module. The software module may be located in a mature storage medium in the art, for example, a random access memory, a flash memory, a read-only memory, a programmable read-only memory, an electrically erasable programmable memory, or a register. The storage medium is located in a memory, and the processor reads information in the memory and completes the steps of the methods in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache. By way of example, and not limitation, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer instructions are loaded and executed on a computer, the procedure or functions according to embodiments of this application are completely or partially generated. The computer may be a general-purpose computer, a dedicated computer, a computer network, or another programmable apparatus. The computer instructions may be stored in a computer-readable storage medium, or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a high-density digital video disc (digital video disc, DVD)), a semiconductor medium (for example, a solid state disk (solid state disk, SSD)), or the like.

The access network device, the first network element, and the charging network element in the foregoing apparatus embodiments completely correspond to the access network device, the first network element, and the charging network element in the method embodiments, and corresponding modules or units perform corresponding steps. For example, a communication unit (a transceiver) performs a receiving or sending step in the method embodiments, and a processing unit (a processor) may perform a step other than sending and receiving steps. For a specific function of the unit, refer to the corresponding method embodiment. There may be one or more processors.

Terms such as "component", "module", and "system" used in this specification indicate computer-related entities, hardware, firmware, combinations of hardware and software, software, or software being executed. For example, a component may be but is not limited to a process that runs on a processor, a processor, an object, an executable file, an execution thread, a program, or a computer. As illustrated by using figures, both a computing device and an application that runs on the computing device may be components. One or more components may reside in a process or an execution thread, and a component may be located on one computer or distributed between two or more computers. In addition, these components may be executed from various computer-readable media that store various data structures. The components may perform communication by using a local process or a remote process and based on, for example, a signal with one or more data packets (for example, data from two components interacting with another component in a local system, a distributed system, or across a network such as the internet interacting with another system by using the signal).

It should be understood that, an "embodiment" mentioned throughout this specification means that particular features, structures, or characteristics related to the embodiment are included in at least one embodiment of this application. Therefore, embodiments in the entire specification do not necessarily refer to a same embodiment. In addition, these particular features, structures, or characteristics may be combined in one or more embodiments in any appropriate manner.

It should be understood that, in embodiments of this application, numbers "first", "second", and the like are merely intended to distinguish between different objects, for example, to distinguish between different network devices, and do not constitute a limitation on the scope of embodiments of this application. Embodiments of this application are not limited thereto.

It should be further understood that, in this application, both "when" and "if" mean that a network element performs corresponding processing in an objective situation, but do not constitute a limitation on time, do not require that the network element has a determining action during implementation, and do not mean other limitations.

It should be further understood that in embodiments of this application, "B corresponding to A" indicates that B is associated with A, and B may be determined based on A. However, it should be further understood that determining B based on A does not mean that B is determined based on only A, and B may alternatively be determined based on A and/or other information.

It should be further understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B, and B; B, B, and C; C and C; C, C, and C; and another combination of A, B, and C. In the foregoing descriptions, three elements A, B, and C are used as an example to describe an optional case of the item. When an expression is "an item includes at least one of the following: A, B, ..., and X", in other words, more elements are included in the expression, a case to which the item is applicable may also be obtained according to the foregoing rule.

It may be understood that, in embodiments of this application, the access network device, the first network element, and the charging network element may perform some or all steps in embodiments of this application. These steps or operations are merely examples. In embodiments of this application, other operations or variations of various operations may be further performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in other manners. For example, the described apparatus embodiments are merely examples. For example, division into the units is merely logical function division and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, that is, may be located at one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes any medium that can store program code, for example, a USB flash drive, a removable hard disk, a read-only memory ROM, a random access memory RAM, a magnetic disk, or a compact disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A message transmission method, comprising:
receiving, by a first network device, a first message from a terminal device, wherein the first message comprises a resume cause value and an integrity check code, the integrity check code is generated based on the resume cause value, the terminal device is in an inactive state, and the resume cause value is a resume cause indicated by a higher layer or a radio resource control RRC layer; and
sending, by the first network device, a second message to a second network device, wherein the second message comprises the resume cause value and the integrity check code, and the second network device is a network device that stores a context of the terminal device.

2. The method according to claim 1, wherein the second message is used to request to obtain the context of the terminal device, and the method further comprises:
sending, by the first network device, a third message to the terminal device based on the resume cause value when the first network device receives the context of the terminal device from the second network device, wherein the third message is a response message of the first message.

3. The method according to claim 1 or 2, wherein the first message further comprises first indication information, and the first indication information indicates that the integrity check code is generated based on the resume cause value.

4. The method according to claim 3, wherein the second message further comprises second indication information, and the second indication information indicates that the integrity check code is generated based on the resume cause value.

5. The method according to any one of claims 1 to 4, wherein the method further comprises:
sending, by the first network device, a broadcast message, wherein the broadcast message comprises third indication information, and the third indication information indicates that the first network device supports a capability of performing integrity protection based on the resume cause value.

6. The method according to any one of claims 1 to 5, wherein the second message further comprises fourth indication information, and the fourth indication information indicates that the first network device supports the capability of performing integrity protection based on the resume cause value.

7. A message transmission method, comprising:
receiving, by a second network device, a second message from a first network device, wherein the second message is triggered when the first network device receives a resume cause value and an integrity check code that are sent by a terminal device, the second message comprises the resume cause value and the integrity check code, the terminal device is in an inactive state, and the resume cause value is a resume cause indicated by a higher layer or a radio resource control RRC layer; and
checking, by the second network device, the integrity check code by using the resume cause value.

8. The method according to claim 7, wherein the second message is used to request to obtain a context of the terminal device, and the method further comprises:
sending, by the second network device, the context of the terminal device to the first network device when the check succeeds.

9. The method according to claim 7 or 8, wherein the second message further comprises second indication information, and the second indication information indicates that the integrity check code is generated based on the resume cause value; and
the checking, by the second network device, the integrity check code by using the resume cause value comprises:
checking, by the second network device, the integrity check code based on the second indication information by using the resume cause value.

10. The method according to any one of claims 7 to 9, wherein the method further comprises:
sending, by the second network device, a broadcast message, wherein the broadcast message comprises fifth indication information, and the fifth indication information indicates that the second network device supports a capability of checking the integrity check code by using the resume cause value, or indicates the terminal device to generate the integrity check code based on the resume cause value.

11. The method according to any one of claims 7 to 9, wherein the method further comprises:
receiving, by the second network device, capability information from the terminal device, wherein the capability information indicates that the terminal device supports a capability of generating the integrity check code based on the resume cause value; and
sending, by the second network device, sixth indication information to the terminal device in response to the capability information, wherein the sixth indication information indicates the terminal device to generate the integrity check code based on the resume cause value.

12. A message transmission method, comprising:
generating, by a terminal device, an integrity check code based on a resume cause value, wherein the terminal device is in an inactive state, and the resume cause value is a resume cause indicated by a higher layer or a radio resource control RRC layer; and
sending, by the terminal device, a first message to a first network device, wherein the first message comprises the resume cause value and the integrity check code.

13. The method according to claim 12, wherein the first message further comprises first indication information, and the first indication information indicates that the integrity check code is generated based on the resume cause value.

14. The method according to claim 12 or 13, wherein the method further comprises:
receiving, by the terminal device, third indication information from the first network device, wherein the third indication information indicates that the first network device supports a capability of performing integrity protection based on the resume cause value; and
the generating, by a terminal device, an integrity check code based on a resume cause value comprises:
generating, by the terminal device, the integrity check code based on the resume cause value in response to the third indication information.

15. The method according to claim 14, wherein before the receiving, by the terminal device, third indication information from the first network device, the method further comprises:
receiving, by the terminal device, fifth indication information from a second network device, wherein the fifth indication information indicates that the second network device supports a capability of checking the integrity check code by using the resume cause value, or indicates the terminal device to generate the integrity check code based on the resume cause value, and the second network device is a network device that stores a context of the terminal device; and
the generating, by the terminal device, the integrity check code based on the resume cause value in response to the third indication information comprises:
generating, by the terminal device, the integrity check code based on the resume cause value in response to the third indication information and the fifth indication information.

16. The method according to claim 14, wherein before the receiving, by the terminal device, third indication information from the first network device, the method further comprises:
sending, by the terminal device, capability information to a second network device, wherein the capability information indicates that the terminal device supports a capability of generating the integrity check code based on the resume cause value, and the second network device is a network device that stores a context of the terminal device; and
receiving, by the terminal device, sixth indication information from the second network device, wherein the sixth indication information indicates the terminal device to generate the integrity check code based on the resume cause value; and
the generating, by the terminal device, the integrity check code based on the resume cause value in response to the third indication information comprises:
generating, by the terminal device, the integrity check code based on the resume cause value in response to the third indication information and the sixth indication information.

17. A message transmission method, comprising:
sending, by a terminal device, a first message to a first network device, wherein the first message comprises a first resume cause value, the terminal device is in an inactive state, and the first resume cause value is a resume cause indicated by a higher layer or a radio resource control RRC layer;
receiving, by the terminal device, a second message from the first network device, wherein the second message comprises a second resume cause value; and
comparing, by the terminal device, the first resume cause value and the second resume cause value, and determining, based on a comparison result, whether the first resume cause value is tampered with.

18. The method according to claim 17, wherein the first message is an RRC connection resume request message, and the second message is an RRC connection resume message or an RRC connection release message.

19. A message transmission method, comprising:
receiving, by a first network device, a first message from a terminal device, wherein the first message comprises a first resume cause value and an integrity check code, and the terminal device is in an inactive state;
sending, by the first network device, a second message to a second network device, wherein the second message comprises the integrity check code, and the second network device is a network device that stores a context of the terminal device; and
sending, by the first network device, a third message to the terminal device when a check of the second network device on the integrity check code succeeds, wherein the third message comprises the first resume cause value.

20. The method according to claim 19, wherein the second message is used to request to obtain the context of the terminal device; and
the sending, by the first network device, a third message to the terminal device when a check of the second network device on the integrity check code succeeds comprises:
sending, by the first network device, the third message to the terminal device when receiving the context of the terminal device from the second network device.

21. The method according to claim 19 or 20, wherein the method further comprises:
receiving, by the first network device, first indication information from the second network device, wherein the first indication information indicates the first network device to send the third message comprising the first resume cause value to the terminal device; and
the sending, by the first network device, a third message to the terminal device comprises:
sending, by the first network device, the third message to the terminal device based on the first indication information.

22. A message transmission method, comprising:
receiving, by a second network device, a first message from a first network device, wherein the first message is triggered when the second network device receives a first resume cause value and an integrity check code that are sent by a terminal device, the first message comprises the integrity check code, and the terminal device is in an inactive state; and
sending, by the second network device, first indication information to the first network device when a check of the second network device on the integrity check code succeeds, wherein the first indication information indicates the first network device to send a message comprising the first resume cause value to the terminal device.

23. The method according to claim 22, wherein the method further comprises:
receiving, by the second network device, second indication information from the terminal device, wherein the second indication information indicates the terminal device to verify whether a resume cause value is tampered with; and
the sending, by the second network device, first indication information to the first network device comprises:
sending, by the second network device, the first indication information to the first network device based on the second indication information.

24. The method according to claim 22 or 23, wherein the first message is used to request to obtain a context of the terminal device; and
the sending, by the second network device, first indication information to the first network device when a check of the second network device on the integrity check code succeeds comprises:
sending, by the second network device, the first indication information and the context of the terminal device to the first network device when the check of the second network device on the integrity check code succeeds.

25. A communication apparatus, comprising:
a transceiver unit, configured to receive a first message from a terminal device, wherein the first message comprises a resume cause value and an integrity check code, the integrity check code is generated based on the resume cause value, the terminal device is in an inactive state, and the resume cause value is a resume cause indicated by a higher layer or a radio resource control RRC layer, wherein
the transceiver unit is further configured to send a second message to a second network device, wherein the second message comprises the resume cause value and the integrity check code, and the second network device is a network device that stores a context of the terminal device.

26. The apparatus according to claim 25, wherein the second message is used to request to obtain the context of the terminal device; and
the transceiver unit is further configured to send, by a first network device, a third message to the terminal device based on the resume cause value when receiving the context of the terminal device from the second network device, wherein the third message is a response message of the first message.

27. The apparatus according to claim 25 or 26, wherein the first message further comprises first indication information, and the first indication information indicates that the integrity check code is generated based on the resume cause value.

28. The apparatus according to claim 27, wherein the second message further comprises second indication information, and the second indication information indicates that the integrity check code is generated based on the resume cause value.

29. The apparatus according to any one of claims 25 to 28, wherein
the transceiver unit is further configured to send a broadcast message, wherein the broadcast message comprises third indication information, and the third indication information indicates that the first network device supports a capability of performing integrity protection based on the resume cause value.

30. The apparatus according to any one of claims 25 to 29, wherein the second message further comprises fourth indication information, and the fourth indication information indicates that the first network device supports the capability of performing integrity protection based on the resume cause value.

31. A communication apparatus, comprising:
a transceiver unit, configured to receive a second message from a first network device, wherein the second message is triggered when the first network device receives a resume cause value and an integrity check code that are sent by a terminal device, the second message comprises the resume cause value and the integrity check code, the terminal device is in an inactive state, and the resume cause value is a resume cause indicated by a higher layer or a radio resource control RRC layer; and
a processing unit, configured to check the integrity check code by using the resume cause value.

32. The apparatus according to claim 31, wherein the second message is used to request to obtain a context of the terminal device; and the transceiver unit is further configured to send the context of the terminal device to the first network device when the check succeeds.

33. The apparatus according to claim 31 or 32, wherein the second message further comprises second indication information, and the second indication information indicates that the integrity check code is generated based on the resume cause value; and
the processing unit is specifically configured to check the integrity check code based on the second indication information by using the resume cause value.

34. The apparatus according to any one of claims 31 to 33, wherein
the transceiver unit is further configured to send a broadcast message, wherein the broadcast message comprises fifth indication information, and the fifth indication information indicates that a second network device supports a capability of checking the integrity check code by using the resume cause value, or indicates the terminal device to generate the integrity check code based on the resume cause value.

35. The apparatus according to any one of claims 31 to 33, wherein
the transceiver unit is further configured to receive capability information from the terminal device, wherein the capability information indicates that the terminal device supports a capability of generating the integrity check code based on the resume cause value; and
the transceiver unit is further configured to send sixth indication information to the terminal device in response to the capability information, wherein the sixth indication information indicates the terminal device to generate the integrity check code based on the resume cause value.

36. A communication apparatus, comprising:
a processing unit, configured to generate an integrity check code based on a resume cause value, wherein a terminal device is in an inactive state, and the resume cause value is a resume cause indicated by a higher layer or a radio resource control RRC layer; and
a transceiver unit, configured to send a first message to a first network device, wherein the first message comprises the resume cause value and the integrity check code.

37. The apparatus according to claim 36, wherein the first message further comprises first indication information, and the first indication information indicates that the integrity check code is generated based on the resume cause value.

38. The apparatus according to claim 36 or 37, wherein
the transceiver unit is further configured to receive third indication information from the first network device, wherein the third indication information indicates that the first network device supports a capability of performing integrity protection based on the resume cause value; and
the processing unit is specifically configured to generate the integrity check code based on the resume cause value in response to the third indication information.

39. The apparatus according to claim 38, wherein
the transceiver unit is further configured to receive fifth indication information from a second network device, wherein the fifth indication information indicates that the second network device supports a capability of checking the integrity check code by using the resume cause value, or indicates the terminal device to generate the integrity check code based on the resume cause value, and the second network device is a network device that stores a context of the terminal device; and
the processing unit is specifically configured to generate the integrity check code based on the resume cause value in response to the third indication information and the fifth indication information.

40. The apparatus according to claim 38, wherein
the transceiver unit is further configured to send capability information to a second network device, wherein the capability information indicates that the terminal device supports a capability of generating the integrity check code based on the resume cause value, and the second network device is a network device that stores a context of the terminal device;
the transceiver unit is further configured to receive sixth indication information from the second network device, wherein the sixth indication information indicates the terminal device to generate the integrity check code based on the resume cause value; and
the processing unit is specifically configured to generate the integrity check code based on the resume cause value in response to the third indication information and the sixth indication information.

41. A communication apparatus, comprising:
a transceiver unit, configured to send a first message to a first network device, wherein the first message comprises a first resume cause value, a terminal device is in an inactive state, and the first resume cause value is a resume cause indicated by a higher layer or a radio resource control RRC layer, wherein
the transceiver unit is further configured to receive a second message from the first network device, wherein the second message comprises a second resume cause value; and
a processing unit, configured to: compare the first resume cause value and the second resume cause value, and determine, based on a comparison result, whether the first resume cause value is tampered with.

42. The apparatus according to claim 41, wherein the first message is an RRC connection resume request message, and the second message is an RRC connection resume message or an RRC connection release message.

43. A communication apparatus, comprising:
a transceiver unit, configured to receive a first message from a terminal device, wherein the first message comprises a first resume cause value and an integrity check code, and the terminal device is in an inactive state, wherein
the transceiver unit is further configured to send a second message to a second network device, wherein the second message comprises the integrity check code, and the second network device is a network device that stores a context of the terminal device; and
the transceiver unit is further configured to send a third message to the terminal device when a check of the second network device on the integrity check code succeeds, wherein the third message comprises the first resume cause value.

44. The apparatus according to claim 43, wherein the second message is used to request to obtain the context of the terminal device; and
the transceiver unit is specifically configured to send the third message to the terminal device when receiving the context of the terminal device from the second network device.

45. The apparatus according to claim 43 or 44, wherein
the transceiver unit is further configured to receive first indication information from the second network device, wherein the first indication information indicates a first network device to send the third message comprising the first resume cause value to the terminal device; and
the transceiver unit is specifically configured to send the third message to the terminal device based on the first indication information.

46. A communication apparatus, comprising:
a transceiver unit, configured to receive a first message from a first network device, wherein the first message is triggered when a second network device receives a first resume cause value and an integrity check code that are sent by a terminal device, the first message comprises the integrity check code, and the terminal device is in an inactive state, wherein
the transceiver unit is further configured to send first indication information to the first network device when a check of the second network device on the integrity check code succeeds, wherein the first indication information indicates the first network device to send a message comprising the first resume cause value to the terminal device.

47. The apparatus according to claim 46, wherein
the transceiver unit is further configured to receive second indication information from the terminal device, wherein the second indication information indicates the terminal device to verify whether a resume cause value is tampered with; and
the transceiver unit is specifically configured to send the first indication information to the first network device based on the second indication information.

48. The apparatus according to claim 46 or 47, wherein the first message is used to request to obtain a context of the terminal device; and
the transceiver unit is specifically configured to send the first indication information and the context of the terminal device to the first network device when the check of the second network device on the integrity check code succeeds.

49. A communication apparatus, comprising a processor, wherein when the processor invokes a computer program or instructions in a memory, the method according to any one of claims 1 to 6, claims 7 to 11, claims 12 to 16, claims 17 and 18, claims 19 to 21, or claims 22 to 24 is performed.

50. A computer-readable storage medium, wherein the computer-readable storage medium comprises a computer program or instructions; and when the computer program or the instructions are run on a computer, the computer is enabled to perform the method according to any one of claims 1 to 6, claims 7 to 11, claims 12 to 16, claims 17 and 18, claims 19 to 21, or claims 22 to 24.

51. A communication apparatus, comprising a processor, a memory, and a communication interface, wherein
the communication interface is configured to receive information or send information;
the memory is configured to store program code; and
the processor is configured to invoke the program code from the memory to perform the method according to any one of claims 1 to 6, claims 7 to 11, claims 12 to 16, claims 17 and 18, claims 19 to 21, or claims 22 to 24.
